# EUROPEAN PATENT APPLICATION

(11) **EP 4 521 706 A1**
(43) Date of publication of application: **12.03.2025**
(21) Application number: 23814630.2
(22) Date of filing: 29.01.2023
(51) Int. Cl.: H04L 45/74

(54) **MESSAGE RECEIVING METHOD, SENDING METHOD, FORWARDING METHOD, APPARATUS, AND SYSTEM**

(30) Priority: 28.05.2022 CN 202210595079; 18.07.2022 CN 202210843988
(71) Applicant: Huawei Technologies Co., Ltd., Shenzhen, Guangdong 518129 (CN)
(72) Inventor: LI, Zhenbin, Shenzhen, Guangdong 518129 (CN); LI, Cheng, Shenzhen, Guangdong 518129 (CN); MAO, Jianwei, Shenzhen, Guangdong 518129 (CN)
(74) Representative: Goddar, Heinz J.
(86) International application number: PCT/CN2023/073744
(87) International publication number: WO 2023/231431

(57) **Abstract**

This application provides a packet receiving method, sending method, and forwarding method, an apparatus, and a system, and relates to the field of communication technologies. In solutions provided in this application, a destination address field of a packet received by a first node includes a segment identifier, and the first node can determine, from the destination address field, an arguments field corresponding to the segment identifier, and can execute a processing behavior indicated by the arguments field. In the solutions provided in this application, the processing behavior can be indicated by using the arguments field in the destination address field. Therefore, compared with a method in which a processing behavior is indicated by additionally inserting an IPv6 extension header or extended TLV, a length of a packet header may be effectively reduced, thereby improving data transmission efficiency. In addition, because the first arguments field is a structured arguments field that can indicate one or more processing behaviors, the first arguments field may instruct the first node to execute abundant processing behaviors.

## Description

This application claims priority to Chinese Patent Application No. 202210595079.1, filed on May 28, 2022 and entitled "METHOD FOR IMPLEMENTING STRUCTURED SRV6 SID ARGUMENT", and to Chinese Patent Application No. 202210843988.2, filed on July 18, 2022 and entitled "PACKET RECEIVING METHOD, SENDING METHOD, AND FORWARDING METHOD, APPARATUS, AND SYSTEM", which are incorporated herein by reference in their entireties.

### TECHNICAL FIELD

This application relates to the field of communication technologies, and in particular, to a packet receiving method, sending method, and forwarding method, an apparatus, and a system.

### BACKGROUND

In an Internet protocol version 6 (Internet protocol version 6, IPv6) system, a plurality of IPv6 extension headers, for example, a hop-by-hop options header (hop-by-hop options header, HBH) or a destination options header (destination options header, DOH), may be inserted into an IPv6 packet. Alternatively, in a segment routing based on Internet protocol version 6 (segment routing based on Internet protocol version 6, SRv6) system, extended TLV may be inserted into a type-length-value (type-length-value, TLV) field of an SRH of an SRv6 packet.

To instruct a node in a packet forwarding path to execute more abundant packet processing behaviors, instruction information indicating a packet processing behavior may be carried in the IPv6 extension header or the TLV field of the SRH. For example, an option (option) indicating network slice information may be inserted into the HBH or the DOH, so that the node in the forwarding path forwards a packet based on a specified network slice. Alternatively, in-situ flow information telemetry (in-situ flow information telemetry, IFIT) TLV may be inserted into the TLV field of the SRH, so that the node in the forwarding path performs in-situ flow information telemetry on traffic.

However, in the foregoing manner of inserting the IPv6 extension header or the extended TLV, a length of a packet header is increased, and therefore data transmission efficiency is reduced.

### SUMMARY

This application provides a packet receiving method, sending method, and forwarding method, an apparatus, and a system, to resolve a technical problem that packet forwarding complexity is high because a SID is defined for each node.

According to a first aspect, a packet receiving method is provided, applied to a first node in a packet forwarding system. The method includes: receiving a first packet, where a first destination address field of the first packet includes a first segment identifier; determining, from the first destination address field, a first arguments field corresponding to the first segment identifier; and executing at least one first processing behavior indicated by the first arguments field.

In the solutions provided in this application, the processing behavior can be indicated by using the arguments field in the destination address field. Therefore, compared with a method in which a processing behavior is indicated by additionally inserting an IPv6 extension header or extended TLV, a length of a packet header can be effectively reduced, in other words, packet header overheads can be effectively reduced, thereby improving data transmission efficiency. In addition, because the first arguments field is a structured arguments field that can indicate one or more processing behaviors, the first arguments field can instruct the first node to execute relatively abundant processing behaviors.

It may be understood that, when determining the at least one first processing behavior indicated by the first arguments field, the first node does not need to match the first arguments field with a function field in the first segment identifier. That is, the first arguments field can indicate the at least one first processing behavior without being matched with the function field.

Optionally, a process in which the first node executes the at least one first processing behavior indicated by the first arguments field may include: identifying at least one behavior instruction carried in the first arguments field; and executing the at least one first processing behavior indicated by the at least one behavior instruction.

Each behavior instruction may indicate one processing behavior. Because the first arguments field can carry one or more behavior instructions, and each behavior instruction can indicate one first processing behavior, flexibility of carrying the behavior instruction in the first arguments field is effectively improved, thereby improving flexibility of executing the processing behavior by the node.

Optionally, a process of identifying the at least one behavior instruction carried in the first arguments field may include: identifying, based on an arguments field template, the at least one behavior instruction carried in the first arguments field. The arguments field template may be used to define a type, a location, and/or a length of the at least one behavior instruction carried in the first arguments field.

Based on the arguments field template, it can be ensured that the first node can accurately and quickly identify the at least one behavior instruction carried in the first arguments field.

Optionally, the first arguments field may further include a template identifier, and the method may further include: determining the arguments field template based on a correspondence between the template identifier and the arguments field template.

Different template identifiers are carried in the first arguments field, so that the first node can parse the first arguments field based on different arguments field templates indicated by the different template identifiers. Based on this, the first arguments field may be flexibly encoded by using the different arguments field templates, thereby effectively improving flexibility of carrying the behavior instruction in the first arguments field.

Optionally, the method may further include: determining the arguments field template based on a correspondence between a behavior or a flavor indicated by the first segment identifier and the arguments field template.

The behavior (behavior) or the flavor (flavor) indicated by the segment identifier may be a behavior or a flavor indicated by the function field in the segment identifier. In the solutions provided in this application, the arguments field template may be alternatively associated with the behavior or the flavor indicated by the function field. For example, a specific behavior or flavor is associated with a specific arguments field template. When the specific behavior or flavor is identified, the corresponding arguments field template can be determined; and then the first arguments field is identified by using the arguments field template, and the at least one behavior instruction carried in the first arguments field is read. Therefore, the first node can directly determine the corresponding arguments field template based on the first segment identifier. In this implementation, no template ID needs to be carried in the first arguments field, so that more bits can be reserved for the first behavior instruction.

Optionally, a process of identifying the at least one behavior instruction carried in the first arguments field may include: identifying at least one flag bit carried in the first arguments field; and identifying, based on the at least one flag bit, the at least one behavior instruction carried in the first arguments field. Each flag bit corresponds to one behavior instruction.

Optionally, each flag bit may indicate whether the first arguments field carries a corresponding behavior instruction, or indicate whether a corresponding behavior instruction in the first arguments field can be identified. If a flag bit indicates that a corresponding behavior instruction can be identified, it indicates that the behavior instruction is valid; or if a flag bit indicates that a corresponding behavior instruction cannot be identified, it indicates that the behavior instruction is invalid.

Because the flag bit in the first arguments field can indicate whether the first arguments field carries a corresponding behavior instruction, or whether a corresponding behavior instruction can be identified, a quantity of behavior instructions that can be identified by the first node can be flexibly selected based on a requirement of an application scenario. In addition, when a behavior instruction is not carried in the first arguments field, a bit occupied by the behavior instruction may be further used to carry another behavior instruction, so that a length of the behavior instruction can be flexibly adjusted.

Optionally, the process in which the first node executes the at least one first processing behavior indicated by the first arguments field may include: on a basis that a structured parameter function of the first node is in an enabled state, executing the at least one first processing behavior indicated by the first arguments field; or determining, based on the behavior or the flavor indicated by the function field in the first segment identifier, that the first arguments field is a structured arguments field, and executing the at least one first processing behavior indicated by the first arguments field.

In the solutions provided in this application, after enabling the structured parameter function or determining that the first arguments field is a structured arguments field, the first node may execute the at least one first processing behavior indicated by the first arguments field. Correspondingly, if the first node does not enable the structured parameter function or identifies that the first arguments field is not a structured arguments field, the first node may not need to parse the first arguments field in a structured manner, and then does not execute the at least one first processing behavior.

Optionally, the first segment identifier may be a compressed segment identifier, and a length of the compressed segment identifier is less than 128 bits. The compressed segment identifier may be a compressed SID (compressed SID, CSID), a micro SID (micro SID, uSID), or a generalized SID (generalized SID, G-SID).

Optionally, a length of the first segment identifier may be 128 bits, in other words, the first segment identifier may be a common SRv6 SID.

Optionally, the first arguments field may be included in the first segment identifier, or the first arguments field is located behind the first segment identifier. For example, if the first segment identifier is a common SRv6 SID, the first segment identifier may include the first arguments field; or if the first segment identifier is a compressed segment identifier, the first arguments field may be located behind the first segment identifier.

Optionally, the first packet belongs to a target service flow, and the method may further include: receiving a second packet of the target service flow, where a second destination address field of the second packet includes a second segment identifier; determining, from the second destination address field, a second arguments field corresponding to the second segment identifier; and executing at least one second processing behavior indicated by the second arguments field. The at least one second processing behavior is different from the at least one first processing behavior.

In the solutions provided in this application, different processing behaviors may be indicated by using different arguments fields, so that the first node can execute the different processing behaviors based on the different arguments fields. For example, different processing behaviors are executed on different packets of the target service flow. Therefore, the first node can execute a relatively large quantity of processing behaviors without an increase in a length of the arguments field.

Optionally, the first segment identifier may further include a function field, and the function field indicates a third processing behavior. The method may further include: processing the first packet according to the third processing behavior.

The third processing behavior is different from the at least one first processing behavior. That is, the first arguments field can independently indicate the at least one first processing behavior without being matched with the function field.

Optionally, the first arguments field may be further used to carry a parameter of the third processing behavior. That is, the first arguments field may further retain a function of an original arguments field, and therefore is compatible with the original function.

The parameter of the third processing behavior may include a parameter of a behavior of an endpoint with decapsulation and layer 2 table flooding (Endpoint with decapsulation and L2 table flooding, End.DT2M), and/or an index of a compressed segment identifier.

Optionally, the process in which the first node executes the at least one first processing behavior indicated by the first arguments field may include: processing the first packet according to the at least one first processing behavior indicated by the first arguments field.

Optionally, the at least one first processing behavior includes at least one of the following behaviors: forwarding the packet based on a slice resource of a network slice; forwarding the packet based on a network service indicated by application-aware information; performing in-situ flow information telemetry; forwarding the packet based on an allocated network resource; encrypting and forwarding the packet; and performing security verification.

Because the first arguments field can indicate the one or more first processing behaviors, the first node can execute abundant processing behaviors.

Optionally, the first arguments field may include at least one of a first subfield, a second subfield, a third subfield, a fourth subfield, a fifth subfield, and a sixth subfield. The first subfield is used to carry slice information of the network slice; the second subfield is used to carry the application-aware information; the third subfield is used to carry information about the in-situ flow information telemetry; the fourth subfield is used to carry information about the allocated network resource; the fifth subfield is used to carry an encrypting manner of the encrypting and forwarding; and the sixth subfield is used to carry a message authentication code used to perform the security verification.

Optionally, the first arguments field may further include a seventh subfield. The seventh subfield is used to carry the parameter of the third processing behavior indicated by the function field in the first segment identifier.

Optionally, the at least one first processing behavior may include at least one of the following behaviors: adjusting a running status of the first node; and locally establishing a flow table, a forwarding table, and/or a state table for traffic in the first node.

The traffic may be a service flow to which the first packet belongs. It may be learned from the foregoing examples of the first processing behavior that the at least one first processing behavior may further include a processing behavior that is locally executed by the first node and that is unrelated to the first packet. That is, the first node executes the first processing behavior without modifying content of the first packet or affecting a forwarding procedure of the first packet.

Optionally, a process of determining the first arguments field from the first destination address field may include: on a basis of determining that the first segment identifier is a local SID of the first node, determining the first arguments field from the first destination address field. It may be understood that if the first segment identifier is not the local SID of the first node, the first node does not need to determine and process the first arguments field.

Optionally, the first node does not support an SRv6 forwarding technology. Correspondingly, the process of determining the first arguments field from the first destination address field may include: determining the first arguments field from the first destination address field based on local configuration information of the first node.

The local configuration information can indicate a location of the first arguments field in the first destination address field. In addition, the local configuration information may be configured by operation and maintenance personnel, or may be delivered by a controller.

Optionally, the first arguments field may further include at least one compressed segment identifier, for example, may include at least one uSID. In addition, the at least one first behavior instruction may be located behind the at least one uSID. In a packet forwarding process, the at least one uSID may be shifted.

According to a second aspect, a packet sending method is provided. The method may be applied to a head node in a packet forwarding system. The method includes: encapsulating a first segment identifier into a first packet; and sending the first packet. The first packet is used by a node receiving the first packet to determine a first arguments field from a first destination address field of the first packet, and execute at least one first processing behavior indicated by the first arguments field. The first arguments field corresponds to the first segment identifier.

Optionally, a process of encapsulating the first segment identifier into the first packet may include: encapsulating the first segment identifier into the first destination address field; or encapsulating an SRH into the first packet, where the SRH includes the first segment identifier. If the first segment identifier is a uSID, and nodes in a forwarding path of the first packet can be encoded in one uSID container, the uSID container may be directly carried by using the first destination address field, that is, the first packet does not need to carry the SRH anymore.

Optionally, the first packet belongs to a target service flow, and the method may further include: encapsulating a second segment identifier into a second packet of the target service flow; and sending the second packet. The second packet is used by a node receiving the second packet to determine a second arguments field from a second destination address field of the second packet, and execute at least one second processing behavior indicated by the second arguments field. The second arguments field corresponds to the second segment identifier, and the at least one second processing behavior is different from the at least one first processing behavior.

Optionally, a node indicated by the first segment identifier is the same as a node indicated by the second segment identifier.

Optionally, the first segment identifier is a compressed segment identifier, and a length of the compressed segment identifier is less than 128 bits; or a length of the first segment identifier is 128 bits.

Optionally, the first arguments field is included in the first segment identifier, or the first arguments field is located behind the first segment identifier.

According to a third aspect, a packet forwarding method is provided, applied to a packet forwarding system. The packet forwarding system includes a first node and a second node. The method includes: a first node receives a first packet, where a first destination address field of the first packet includes a first segment identifier; the first node determines a first arguments field from the first destination address field, where the first arguments field corresponds to the first segment identifier; and the first node executes at least one first processing behavior indicated by the first arguments field; and the second node receives a second packet sent by the first node, where the second packet is obtained based on the first packet, and a second destination address field of the second packet includes a second segment identifier; the second node determines a second arguments field from the second destination address field, where the second arguments field corresponds to the second segment identifier; and the second node executes at least one second processing behavior indicated by the second arguments field.

Optionally, the first arguments field and the second arguments field may be a same field. That is, in a process of processing the first packet, the first node may update the segment identifier in the first destination address field, and does not need to update the first arguments field.

Optionally, the at least one first processing behavior may be the same as the at least one second processing behavior.

Optionally, both the first segment identifier and the second segment identifier may be compressed segment identifiers, and a length of the compressed segment identifier is less than 128 bits; or both a length of the first segment identifier and a length of the second segment identifier may be 128 bits.

Optionally, the first arguments field may be included in the first segment identifier, and the second arguments field may be included in the second segment identifier; or the first arguments field may be located behind the first segment identifier, and the second arguments field may be located behind the second segment identifier.

According to a fourth aspect, a network device is provided. The network device may be a first node or a third node (a head node) in a packet forwarding system. The network device includes at least one module. The at least one module may be configured to implement the method provided in any one of the foregoing aspects.

According to a fifth aspect, a network device is provided. The network device may be a first node or a head node in a packet forwarding system. The network device includes a memory, a processor, and a computer program that is stored in the memory and that can run on the processor. When executing the computer program, the processor implements the method provided in any one of the foregoing aspects.

According to a sixth aspect, a network device is provided. The network device may be a first node or a head node in a packet forwarding system. The network device may include a main control board and an interface board. The main control board and the interface board may be configured to implement the method provided in any one of the foregoing aspects.

According to a seventh aspect, a computer-readable storage medium is provided. The computer-readable storage medium stores instructions, and the instructions are executed by a processor to implement the method provided in any one of the foregoing aspects.

According to an eighth aspect, a computer program product including instructions is provided. When the instructions run on a processor, the processor is enabled to perform the method provided in any one of the foregoing aspects.

According to a ninth aspect, a packet forwarding system is provided. The packet forwarding system includes a plurality of nodes. At least one of the plurality of nodes can implement the packet receiving method provided in the first aspect. For example, a first node in the plurality of nodes may implement the packet receiving method provided in the first aspect. The first node and a second node may further implement the packet forwarding method provided in the third aspect.

Optionally, at least one (for example, a third node) of the plurality of nodes may be further configured to implement the packet sending method provided in the second aspect.

According to a tenth aspect, a chip is provided. The chip may be configured to implement the method provided in any one of the foregoing aspects.

In conclusion, this application provides the packet receiving method, sending method, and forwarding method, the apparatus, and the system. In the solutions provided in this application, the destination address field of the packet received by the first node includes the segment identifier, and the first node can determine, from the destination address field, the arguments field corresponding to the segment identifier, and can execute the processing behavior indicated by the arguments field. In the solutions provided in this application, the processing behavior can be indicated by using the arguments field in the destination address field. Therefore, compared with a method in which a processing behavior is indicated by additionally inserting an IPv6 extension header or extended TLV, a length of a packet header can be effectively reduced, thereby improving data transmission efficiency. In addition, because the first arguments field is a structured arguments field that can indicate one or more processing behaviors, the first arguments field can instruct the first node to execute relatively abundant processing behaviors.

### BRIEF DESCRIPTION OF DRAWINGS

FIG. 1 is a schematic diagram of a structure of a packet forwarding system according to an embodiment of this application;
FIG. 2 is a schematic diagram of a structure of an SRv6 packet according to an embodiment of this application;
FIG. 3 is a schematic diagram of a structure of a SID according to an embodiment of this application;
FIG. 4 is a schematic diagram of a structure of a compressed segment identifier according to an embodiment of this application;
FIG. 5 is a schematic diagram of a structure of a uSID container according to an embodiment of this application;
FIG. 6 is a schematic diagram of a structure of each of an HOH and a DOH according to an embodiment of this application;
FIG. 7 is a schematic diagram of a structure of an options field according to an embodiment of this application;
FIG. 8 is a schematic diagram of a structure of an SRH according to an embodiment of this application;
FIG. 9 is a schematic diagram of a structure of HMAC TLV according to an embodiment of this application;
FIG. 10 is a flowchart of a packet receiving method according to an embodiment of this application;
FIG. 11 is a flowchart of a packet forwarding method according to an embodiment of this application;
FIG. 12 is a schematic diagram of a structure of a first destination address field according to an embodiment of this application;
FIG. 13 is a schematic diagram of a structure of another first destination address field according to an embodiment of this application;
FIG. 14 is a schematic diagram of a structure of a G-SID container according to an embodiment of this application;
FIG. 15 is a schematic diagram of a structure of a first arguments field according to an embodiment of this application;
FIG. 16 is a schematic diagram of a first arguments field template according to an embodiment of this application;
FIG. 17 is a schematic diagram of arrangement locations of flag bits in a first arguments field according to an embodiment of this application;
FIG. 18 is a schematic diagram of an arrangement order of behavior instructions in a first arguments field according to an embodiment of this application;
FIG. 19 is a schematic diagram of a padding manner of a redundant bit in a first arguments field according to an embodiment of this application;
FIG. 20 is a schematic diagram of padding of a first behavior instruction in a first arguments field according to an embodiment of this application;
FIG. 21 is a schematic diagram of a structure of a first node according to an embodiment of this application;
FIG. 22 is a schematic diagram of a structure of a third node according to an embodiment of this application;
FIG. 23 is a schematic diagram of a structure of a second node according to an embodiment of this application;
FIG. 24 is a schematic diagram of a structure of a network device according to an embodiment of this application; and
FIG. 25 is a schematic diagram of a structure of another network device according to an embodiment of this application.

### DESCRIPTION OF EMBODIMENTS

With reference to the accompanying drawings, the following describes in detail a packet receiving method, sending method, and forwarding method, an apparatus, and a system provided in embodiments of this application.

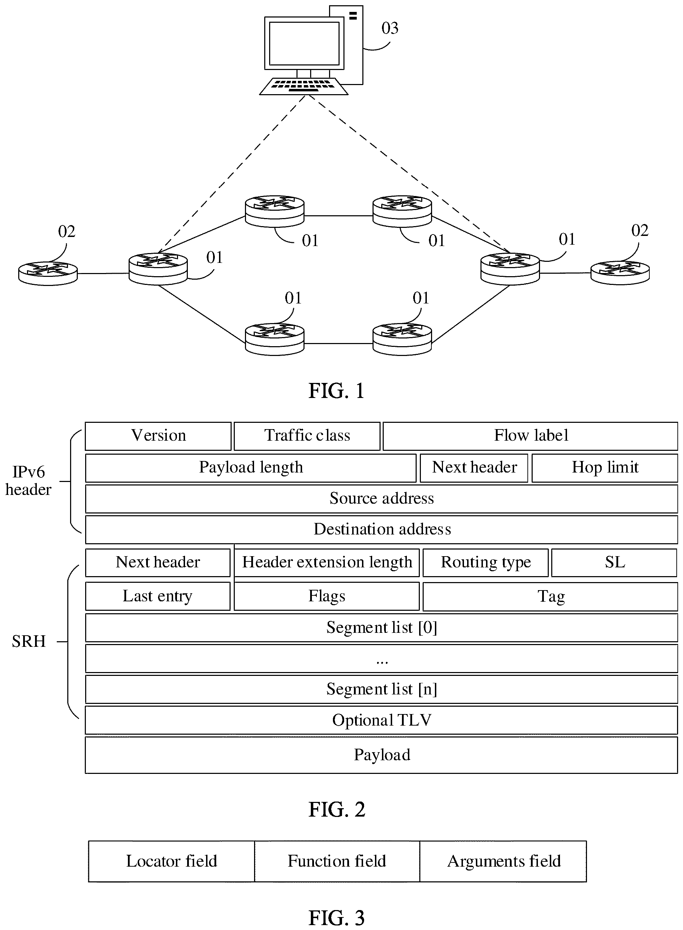

FIG. 1 is a schematic diagram of a structure of a packet forwarding system according to an embodiment of this application. As shown in FIG. 1, the packet forwarding system may include a plurality of nodes 01, and a communication connection is established between the plurality of nodes 01. Each node 01 may be a router, a switch, a broadband remote access server (broadband remote access server, BRAS), a firewall, a virtual network element, or the like, and each node 01 may also be referred to as a network device.

For example, the node 01 may be a provider (provider, P) device or a provider edge (provider edge, PE) device. If the node 01 is a PE device, as shown in FIG. 1, the packet forwarding system may further include a customer edge (customer edge, CE) device 02 connected to the PE device. The CE device 02 is connected to a user terminal, and is configured to provide a network access service for the user terminal. The user terminal may also be referred to as user equipment, and may be a device such as a residential gateway (residential gateway, RGW), a mobile phone, a notebook computer, or a desktop computer.

Optionally, as shown in FIG. 1, the packet forwarding system may further include a controller 03. The controller 03 is connected to at least one node 01, and is configured to manage and control the node 01 connected to the controller 03. The controller 03 may be a network controller.

In this embodiment of this application, the packet forwarding system may be an SRv6 system, a packet forwarded by nodes in the SRv6 system is an SRv6 packet, and the SRv6 packet is a packet obtained by inserting an SRH into an IPv6 packet. FIG. 2 is a schematic diagram of a structure of an SRv6 packet according to an embodiment of this application. As shown in FIG. 2, the SRv6 packet includes an IPv6 header, an SRH, and a payload (payload). The IPv6 header includes the following fields: a version (version), a traffic class (traffic class, TC), a flow label (flow label), a payload length (payload length), a next header (next header), a hop limit (hop limit), a source address (source address, SA), and a DA.

The SRH includes the following fields: a next header, a header extension length (header extension length, Hdr Ext Len), a routing type (routing type), a segment left (segment left, SL), a last entry (last entry), flags (flags), a tag (tag), a segment list, and optional TLV. The segment list includes a total of n+1 identifier fields (n may be an integer greater than or equal to 1) from a segment list [0] to a segment list [n]. Each identifier field is used to carry a SID of one node in a packet forwarding path. The SID may be an IPv6 address of the node.

FIG. 3 is a schematic diagram of a structure of a SID according to an embodiment of this application. As shown in FIG. 3, each SID may include a locator (locator) field, a function (function) field, and an arguments (arguments) field. The locator field is used to identify a network domain and a node in the network domain. The function field is used to identify an action performed on the corresponding node. The action is also referred to as a behavior (behavior). The arguments field is used to carry a parameter required for performing the action.

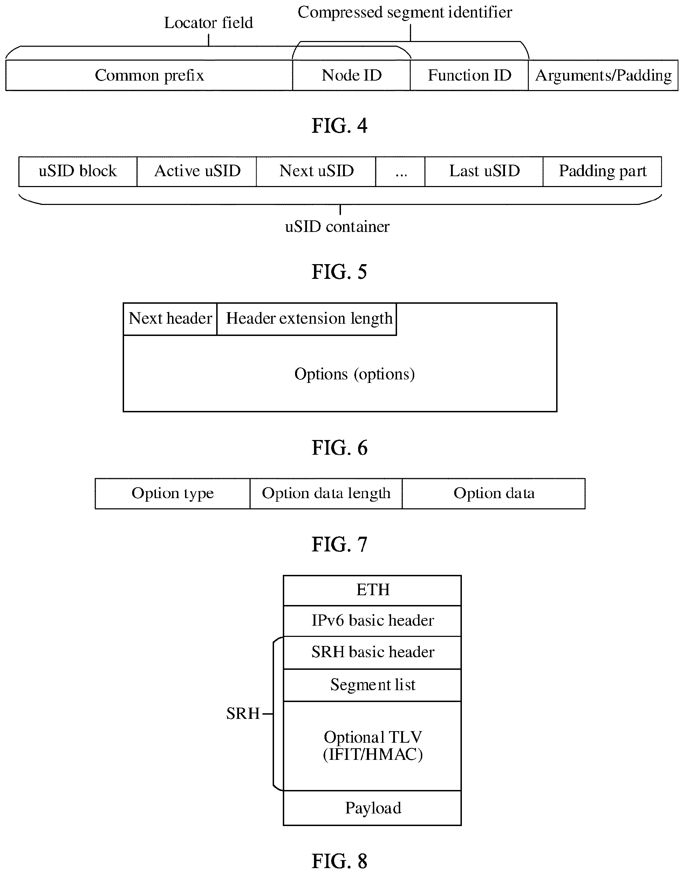

Because a length of each SID in a segment list is generally 128 bits (bits), when a relatively large quantity of SIDs need to be carried in an SRH, a length of a packet header is significantly increased, and therefore data transmission efficiency is reduced. To reduce the length of the packet header, the industry proposes a solution of compressing the SID. A compressed segment identifier is defined in the compression solution. As shown in FIG. 4, the compressed segment identifier may include at least one of a node (node) ID and a function (function) ID. FIG. 4 is illustrated by using an example in which the compressed segment identifier includes the node ID and the function ID. The node ID and a common prefix (common prefix) in a destination address field can constitute a locator field. The locator field, the function ID, and an arguments field (or a padding field) in the destination address field can constitute a 128-bit SRv6 SID.

If one compressed segment identifier includes only one of a node ID and a function ID, a node ID and a function ID may be respectively carried by using two adjacent compressed segment identifiers, to identify a node in a network domain and identify a processing behavior that needs to be executed by the node.

It may be understood that the compressed segment identifier in this embodiment of this application may be a CSID, a uSID, or a G-SID. The following uses the uSID as an example for description. As shown in FIG. 5, a uSID container (container) is defined in a uSID solution. A structure of the uSID container may be as follows: <uSID block> <active uSID> <next uSID> ... <last uSID> <padding part>. The padding part is optional.

The uSID block (Block) is an address block of a uSID, and may be a common prefix, for example, an IPv6 prefix. The active uSID (Active uSID) is the first uSID located behind the uSID block. The next uSID (Next uSID) is a uSID located behind the active uSID, and the uSID container may include one or more next uSIDs. The last uSID (Last uSID) is a uSID located in front of an end-of-container. The padding (padding) part is a reserved part located at a trailer of the uSID container, a value of the padding part is generally 0, and the padding part may also be referred to as the end-of-container (End-of-Container).

If a destination address (destination address, DA) field of an SRv6 packet includes a plurality of compressed SIDs, a node may perform table lookup based on a combination of a uSID block and an active uSID, to determine a corresponding processing behavior. The processing behavior generally includes shift (shift) and forwarding. Assuming that lengths of the uSID block, each uSID, and each end-of-container in a uSID container are all 16 bits, the forwarding behavior may include:
copying content of bits 32 to 127 in the destination address field to bits 16 to 111 (performing binary left shift by 16 bits);
setting content of bits 112 to 127 in the destination address field to 0; and
forwarding the packet based on an updated destination address.

Based on the foregoing analysis, it may be learned that a plurality of uSIDs in a uSID container may share an address block of a same uSID, and therefore a length of a packet header can be effectively reduced. In addition, if nodes in a forwarding path of an SRv6 packet can be encoded in one uSID container, the uSID container may be directly carried by using a destination address field of the SRv6 packet, that is, the SRv6 packet does not need to carry an SRH anymore.

It may be understood that, in addition to an SRH, a plurality of other types of IPv6 extension headers, for example, an HBH or a DOH, may be inserted into an IPv6 packet. To instruct a node in a forwarding path to execute more abundant processing behaviors, instruction information indicating a packet processing behavior may be usually carried in the IPv6 extension header or a TLV field of the SRH. For example, refer to FIG. 6, the HBH and the DOH each may include a next header field, a header extension length field, and an options field. Therefore, an option indicating network slice information may be inserted into the HBH or the DOH, so that the node in the forwarding path forwards the packet based on a network slice. Refer to FIG. 7, the options field may include an option type (option type), an option data length (option data length), and option data (option data). Alternatively, as shown in FIG. 8, IFIT TLV and/or hashed message authentication code (hashed message authentication code, HMAC) TLV may be inserted into the optional TLV field of the SRH. The IFIT TLV can instruct the node in the forwarding path to perform in-situ flow information telemetry on the packet, and the HMAC TLV can instruct the node in the forwarding path to perform security verification on the packet.

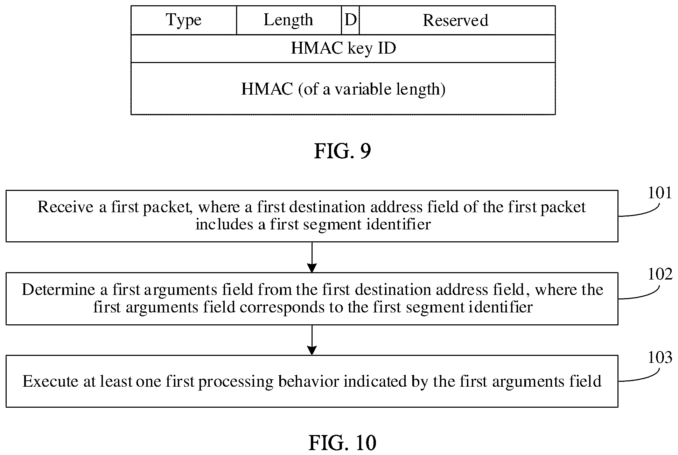

It can be learned from FIG. 8 that optional TLV in the SRH is located between a segment list and a payload. An SRv6 packet further includes an Ethernet header (Ethernet header, ETH) and an IPv6 basic header (basic header). FIG. 9 is a schematic diagram of a structure of HMAC TLV according to an embodiment of this application. As shown in FIG. 9, the HMAC TLV includes a type field, a length field, a D field, a reserved field, an HMAC key (key) ID, and an HMAC. A length of the HMAC key ID is 4 bytes, and a length of the HMAC is a variable (variable) length. D in the D field indicates a destination address.

However, in the foregoing manner of inserting the IPv6 extension header or the extended TLV, a length of a packet header is significantly increased, and therefore data transmission efficiency is reduced. In addition, in the foregoing manner of inserting the IPv6 extension header, each node in a forwarding path needs to parse the IPv6 extension header and execute a corresponding processing behavior. Therefore, in this manner, flexibility is relatively low, and a function of executing processing behaviors by only some specified nodes in the forwarding path cannot be implemented.

In addition, in the SID compression solution, if nodes in a forwarding path of an SRv6 packet can be encoded in a destination address field, the SRv6 packet does not carry an SRH anymore. Correspondingly, more abundant processing behaviors cannot be indicated by using an optional TLV field in the SRH. In addition, some DOHs need to be inserted in front of the SRH. If the SRv6 packet does not carry the SRH anymore, some DOHs cannot be carried, and therefore instruction information indicating a packet processing behavior cannot be carried by using the DOHs.

An embodiment of this application provides a packet receiving method. The method may be applied to a first node in the packet forwarding system shown in FIG. 1, and the first node may be any node in the packet forwarding system. Refer to FIG. 10, the method includes the following steps.

Step 101: Receive a first packet, where a first destination address field of the first packet includes a first segment identifier.

In this embodiment of this application, if the first node is an intermediate node or a tail node (also referred to as an egress node) in the packet forwarding system, the first node can receive the first packet sent by another node (for example, a head node) in the packet forwarding system. The first destination address field of the first packet includes the first segment identifier. The first segment identifier may be a compressed segment identifier whose length is less than 128 bits, or the first segment identifier may be a common SRv6 SID whose length is 128 bits.

If the first node is a head node, also referred to as an ingress node or a source (source) node, in the packet forwarding system, the first node may receive the first packet sent by a CE device or a user terminal. In addition, the first node may add the first segment identifier to the first destination address field of the first packet. For example, when the first segment identifier is a common SRv6 SID or a compressed segment identifier, the first node may first encapsulate an SRH into the first packet. The SRH includes the first segment identifier. For example, a value of the last identifier field in a segment list is the first segment identifier. Then, the first node may copy the first segment identifier in the segment list to the first destination address field. Alternatively, if the first segment identifier is a compressed segment identifier and the first packet does not include an SRH, the first node may directly encapsulate the first segment identifier into the first destination address field of the first packet.

Step 102: Determine a first arguments field from the first destination address field, where the first arguments field corresponds to the first segment identifier.

In this embodiment of this application, the first node can further determine, from the first destination address field, the first arguments (arguments) field corresponding to the first segment identifier. For example, the first arguments field may be included in the first segment identifier, and correspondingly, the first node may determine the first arguments field from the first segment identifier. Alternatively, the first arguments field may be located behind the first segment identifier, and the first node may determine the first arguments field from the first destination address field based on a preconfigured encapsulation location of the first arguments field in the first destination address field. For example, the first arguments field may be located at a trailer of the first destination address field, for example, 16 to 32 bits at the end of the first destination address field. Alternatively, the first arguments field may be located behind the first segment identifier and adjacent to the first segment identifier, for example, 16 to 32 bits behind the first segment identifier.

Step 103: Execute at least one first processing behavior indicated by the first arguments field.

The first arguments field can indicate the at least one first processing behavior. The first node may execute the at least one first processing behavior. For example, the first node may process the first packet according to the at least one first processing behavior. Because the first arguments field may indicate one or more first processing behaviors, the first arguments field may also be referred to as a structured arguments (structured arguments) field. Alternatively, the first arguments field may also be referred to as a generalized arguments (generalized arguments) field.

It may be understood that the first segment identifier may further include a function (function) field, and the function field can indicate a processing behavior (a third processing behavior described below) of the first node for the first packet. In this embodiment of this application, when determining the at least one first processing behavior indicated by the first arguments field, the first node does not need to match the first arguments field with the function field. That is, the first node may directly determine the at least one first processing behavior based on the first arguments field, or it may be understood that the first arguments field can independently indicate the at least one first processing behavior without being matched with the function field in the first segment identifier.

It may be further understood that the at least one first processing behavior indicated by the first arguments field may be the same as or may be less than processing behaviors indicated by additionally inserting an IPv6 extension header or extended TLV. This is not limited in this embodiment of this application.

Optionally, the at least one first processing behavior indicated by the first arguments field may include a processing behavior for the first packet, and the at least one first processing behavior may include at least one of the following behaviors: forwarding the packet based on a slice resource of a network slice; forwarding the packet based on a network service indicated by application-aware information; performing in-situ flow information telemetry; forwarding the packet based on an allocated network resource; encrypting and forwarding the packet; and performing security verification.

Optionally, the at least one first processing behavior indicated by the first arguments field may further include a processing behavior that is locally executed by the first node and that is unrelated to the first packet. For example, the at least one first processing behavior may include at least one of the following behaviors: adjusting a running status of the first node; and locally establishing a flow table, a forwarding table, and/or a state table for traffic in the first node. The traffic is traffic to which the first packet belongs. The running status of the first node may include a sleep state, a power-off state, and the like. Correspondingly, the adjusting a running status of the first node may be enabling the first node to enter the sleep state or the power-off state.

In conclusion, this embodiment of this application provides the packet receiving method. The destination address field of the first packet received by the first node includes the first segment identifier, and the first node can determine, from the destination address field, the first arguments field corresponding to the first segment identifier, and can execute the at least one first processing behavior indicated by the first arguments field. In the method provided in this embodiment of this application, the processing behavior can be indicated by using the first arguments field in the destination address field. Therefore, compared with a method in which a processing behavior is indicated by additionally inserting an IPv6 extension header or extended TLV, a length of a packet header can be effectively reduced, thereby improving data transmission efficiency. In addition, because the first arguments field is a structured arguments field that can indicate one or more first processing behaviors, the first arguments field can instruct the first node to execute relatively abundant processing behaviors.

In addition, in the method provided in this embodiment of this application, the first segment identifier may be a compressed segment identifier, for example, may be a uSID. In addition, if a forwarding path of the first packet can be encoded in the destination address field, no SRH needs to be inserted into the first packet. In this case, although instruction information indicating a packet processing behavior cannot be carried by using an optional TLV field in an SRH or some DOHs, the first arguments field in the destination address field can be used to instruct the first node to execute abundant processing behaviors.

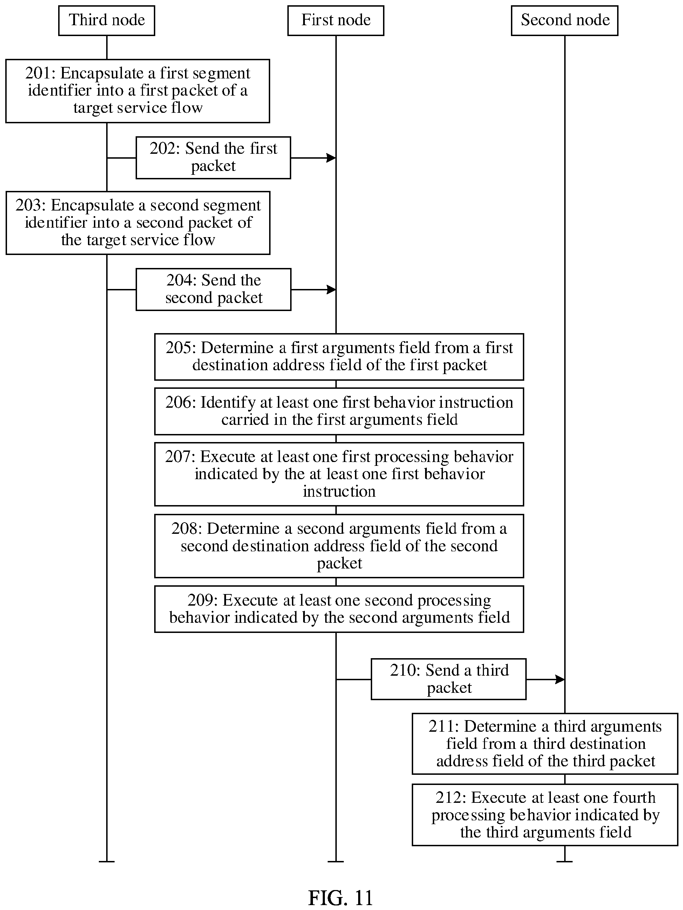

An embodiment of this application provides a packet forwarding method. The method may be applied to a packet forwarding system. The following describes the packet forwarding method by using an example in which the packet forwarding system includes a first node, a second node, and a third node, the third node is a head node, the first node is an intermediate node, and the second node is an intermediate node or a tail node. Refer to FIG. 11, the method includes the following steps.

Step 201: The third node encapsulates a first segment identifier into a first packet of a target service flow.

In this embodiment of this application, as the head node of the target service flow in the packet forwarding system, the third node may encapsulate the first segment identifier into the first packet of the target service flow. The target service flow may be a service flow that needs to be processed by using a specified processing behavior. It may be understood that the third node can further encapsulate a first arguments field into the first packet. The first arguments field indicates at least one first processing behavior.

Optionally, the first segment identifier may be a common SRv6 SID, and a length of the common SRv6 SID may be 128 bits. Alternatively, the first segment identifier may be a compressed segment identifier, and a length of the compressed segment identifier is less than 128 bits. For example, the length of the compressed segment identifier may be 16 to 32 bits. The compressed segment identifier may also be referred to as a CSID, a uSID, or a G-SID.

In a first possible implementation, if the first segment identifier is a uSID, and a forwarding path of the first packet can be encoded in a destination address field (128 bits), the third node can directly encapsulate the first segment identifier into the first destination address field of the first packet. In addition, the third node can further encapsulate, into the first destination address field, the first arguments field corresponding to the first segment identifier, and the first arguments field may be located behind the first segment identifier.

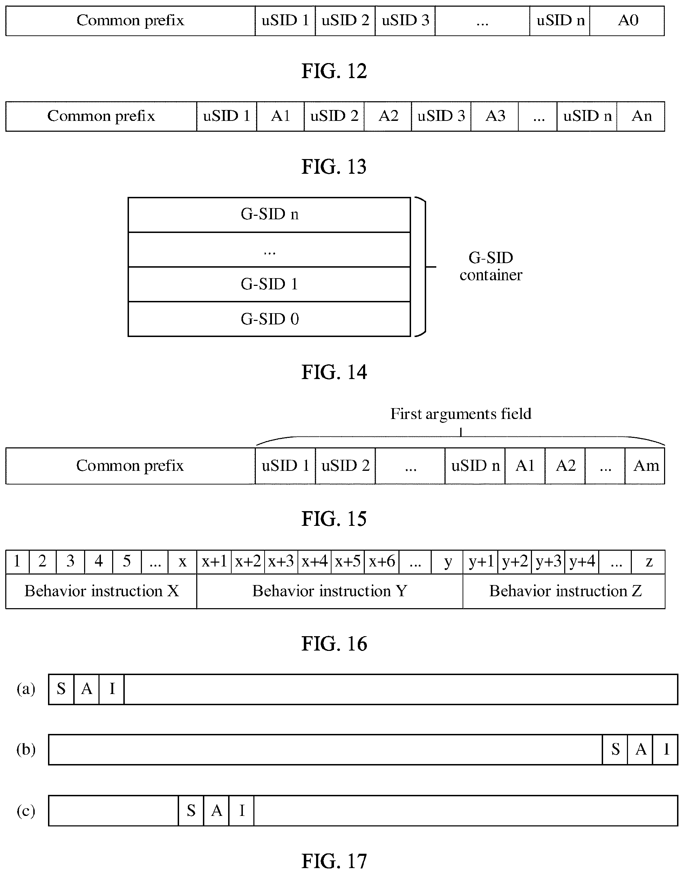

For example, refer to FIG. 12, the third node may encapsulate a common prefix and a total of n uSIDs from a uSID 1 to a uSID n into the first destination address field of the first packet. n is an integer greater than 1, and the first segment identifier may be any uSID in the uSID 1 to the uSID n.

It may be learned from FIG. 12 that the first destination address field may further include a first arguments field A0 located behind the n uSIDs, and the first arguments field A0 may be shared by the n uSIDs. In other words, the first arguments field A0 can correspond to each uSID in the first destination address field. Alternatively, refer to FIG. 13, the destination address field may include n arguments fields in one-to-one correspondence with the n uSIDs. Each arguments field is located behind a corresponding uSID and is adjacent to the corresponding uSID. Correspondingly, the first arguments field may be an arguments field located behind the first segment identifier. For example, assuming that the first segment identifier is the uSID1, the first arguments field may be A1.

In a second possible implementation, if the first segment identifier is a common SRv6 SID, if the first segment identifier is a G-SID or a CSID, or if the first segment identifier is a uSID, and a forwarding path of the first packet cannot be encoded in a destination address field, the third node may encapsulate an SRH into the first packet. The SRH includes the first segment identifier.

For example, if the first segment identifier is a common SRv6 SID, refer to FIG. 2, the SRH encapsulated by the third node into the first packet may include a total of n+1 identifier fields from a segment list [0] to a segment list [n], and the first segment identifier may be carried in any segment list in the segment list [0] to the segment list [n]. In addition, refer to FIG. 3, the first arguments field may be included in the first segment identifier.

If the first segment identifier is a G-SID, as shown in FIG. 14, the SRH encapsulated by the third node into the first packet may include one or more G-SID containers (container). The G-SID container may include a total of n+1 G-SIDs from a G-SID 0 to a G-SID n, and the first segment identifier may be any G-SID in the G-SID 0 to the G-SID n.

In a third possible implementation, if the first segment identifier is a uSID, and a forwarding path of the first packet cannot be encoded in a destination address field, refer to FIG. 2, an SRH encapsulated by the third node into the first packet may include a total of n+1 identifier fields from a segment list [0] to a segment list [n]. Each identifier field may carry a SID of one node, or may carry a uSID block and a plurality ofuSIDs, for example, may carry a uSID container shown in FIG. 5. The first segment identifier may be carried in any uSID container, and the first arguments field may be located behind the first segment identifier. For a location of the first arguments field, refer to FIG. 12 or FIG. 13.

Step 202: The third node sends the first packet to the first node.

After encapsulating the first segment identifier into the first packet, the first node may send the first packet to the first node. If the first node is a next-hop node of the third node, the third node may directly send the first packet to the first node. If the first node is not a next-hop node of the third node, the third node may forward the first packet to the first node by using another intermediate node.

Step 203: The third node encapsulates a second segment identifier into a second packet of the target service flow.

A second arguments field corresponding to the second segment identifier is further encapsulated into the second packet, and the second arguments field can indicate at least one second processing behavior, that is, the second arguments field is also a structured arguments field. The at least one second processing behavior is different from the at least one first processing behavior indicated by the first arguments field. That the at least one second processing behavior is different from the at least one first processing behavior may mean that the at least one second processing behavior and the at least one first processing behavior have no same processing behavior, or the at least one second processing behavior is merely partially the same as the at least one first processing behavior.

It may be understood that the first arguments field may include at least one first behavior instruction, and the at least one first behavior instruction indicates the at least one first processing behavior. The second arguments field may include at least one second behavior instruction, and the at least one second behavior instruction indicates the at least one second processing behavior.

In this embodiment of this application, if the first node needs to execute a relatively large quantity of processing behaviors (for example, processing behaviors executed by the first node on the target service flow), and a plurality of behavior instructions indicating the plurality of processing behaviors cannot be carried by using one arguments field of a limited length, the plurality of behavior instructions may be carried by using a plurality of arguments fields. Each arguments field may carry some behavior instructions, and different arguments fields may carry different behavior instructions. In addition, each arguments field may correspond to one segment identifier (be associated with one segment identifier), and different arguments fields may correspond to different segment identifiers.

Correspondingly, when arranging segment lists of a forwarding path of the target service flow, the third node (or a controller) may generate a plurality of segment lists based on a plurality of segment identifiers associated with the arguments fields, and then generate a plurality of SRv6 policies (policy). In a process of forwarding packets of the target service flow, the third node may use different SRv6 policies, that is, encapsulate different segment identifiers and arguments fields corresponding to the segment identifiers, for different packets of the target service flow. For example, the third node may use different SRv6 policies for different packets of the target service flow in a load balancing, polling, random, or another manner. In this way, nodes in the forwarding path can execute different processing behaviors, so that the foregoing plurality of processing behaviors can be executed. For example, the nodes in the forwarding path can execute different processing behaviors on different packets of the target service flow.

It may be understood that different packets in the target service flow may be forwarded by using a same forwarding path. Therefore, the foregoing plurality of segment identifiers may indicate same nodes. Correspondingly, the first segment identifier and the second segment identifier may indicate a same node, for example, may both indicate the first node.

For example, it is assumed that the following three processing behaviors need to be executed on the packets of the target service flow: forwarding the packets based on a slice resource of a network slice; forwarding the packets based on a network service indicated by application-aware information; and performing in-situ flow information telemetry. In this case, the slice information of the network slice and the application-aware information may be carried by using a first arguments field, and information about the in-situ flow information telemetry may be carried by using a second arguments field. In addition, the first arguments field may be associated with a first segment identifier SID 1, and the second arguments field may be associated with a second segment identifier SID 2. The first segment identifier SID 1 and the second segment identifier SID 2 may indicate a same node in the forwarding path of the target service flow.

If the forwarding path of the target service flow further includes a node R, a node S, and a node T, and segment identifiers of the three nodes are respectively a SID R, a SID S, and a SID T, the third node may arrange two segment lists, and may generate two SRv6 policies corresponding to the two segment lists. For example, the third node may generate an SRv6 policy 1 corresponding to a segment list 1, where the segment list 1 is as follows: SID 1 - SID R - SID S - SID T. The third node may generate an SRv6 policy 2 corresponding to a segment list 2, where the segment list 2 is as follows: SID 2 - SID R - SID S - SID T.

It is assumed that the target service flow includes a total of 10 packets from a packet 1 to a packet 10, and the third node uses different SRv6 policies for the packets of the target service flow in a polling or load balancing manner. In this case, the third node may use the SRv6 policy 1 for the packet 1, the packet 3, the packet 5, the packet 7, and the packet 9. That is, the third node may encapsulate the segment list 1 into the packets (first packets), where the segment list 1 includes the first segment identifier SID 1 associated with the first arguments field. In addition, the third node may use the SRv6 policy 2 for the packet 2, the packet 4, the packet 6, the packet 8, and the packet 10. That is, the third node may encapsulate the segment list 2 into the packets (second packets), where the segment list 2 includes the second segment identifier SID 2 associated with the second arguments field. Based on this, a node indicated by the SID 1 may forward the packet 1, the packet 3, the packet 5, the packet 7, and the packet 9 based on the network slice and the network service indicated by the application-aware information. In addition, a node indicated by the SID 2 may perform in-situ flow information telemetry on the packet 2, the packet 4, the packet 6, the packet 8, and the packet 10. In this way, the nodes in the forwarding path can execute the foregoing three processing behaviors on the packets of the target service flow.

It may be understood that both a structure and an encapsulation location of the second segment identifier may be the same as those of the first segment identifier, and both a structure and an encapsulation location of the second arguments field may also be the same as those of the first arguments field. Details are not described herein.

Step 204: The third node sends the second packet to the first node.

Refer to step 202, the third node may directly send the second packet to the first node, or may forward the second packet to the first node by using another intermediate node.

Step 205: The first node determines the first arguments field from the first destination address field of the first packet.

The first destination address field of the first packet received by the first node includes the first segment identifier. The first segment identifier may be directly encapsulated by the third node into the first destination address field, or may be copied by a previous-hop node of the first node from the SRH of the first packet to the first destination address field.

The first node can determine, from the first destination address field of the first packet, the first arguments field corresponding to the first segment identifier. In a possible implementation, the first arguments field may be included in the first segment identifier. Correspondingly, the first node may determine the first arguments field from the first segment identifier. For example, refer to FIG. 3, assuming that the first segment identifier is an SRv6 SID of 128 bits, the first node may determine least significant bits in the first segment identifier as the first arguments field.

In another possible implementation, the first arguments field may be located behind the first segment identifier, and the first node may determine the first arguments field from the first destination address field based on a preconfigured encapsulation location of the first arguments field in the first destination address field.

For example, refer to FIG. 12, assuming that the first segment identifier is a compressed segment identifier, the third node may determine least significant bits in the first destination address field as the first arguments field. Alternatively, refer to FIG. 13, the third node may determine, as the first arguments field, bits located behind the first segment identifier and adjacent to the first segment identifier.

In this embodiment of this application, the first node may be a node that supports an SRv6 forwarding technology. Correspondingly, after receiving the first packet, the first node may first detect whether the first segment identifier in the first destination address field of the first packet is a local SID of the first node. If the first segment identifier is the local SID of the first node, the first node may continue to determine the first arguments field from the first destination address field. If the first segment identifier is not the local SID of the first node, the first node may not need to determine the first arguments field from the first destination address field, and then not need to process the first arguments field.

It may be understood that the first node may also be a node that does not support the SRv6 forwarding technology. Correspondingly, in step 205, the first node may determine the first arguments field from the first destination address field of the first packet based on local configuration information of the first node. Therefore, a node that does not support the SRv6 forwarding technology can also execute the at least one first processing behavior. The local configuration information can indicate a location of the first arguments field in the first destination address field. In addition, the local configuration information may be configured by operation and maintenance personnel, or may be delivered by a controller.

Step 206: The first node identifies the at least one first behavior instruction carried in the first arguments field.

As described above, the first arguments field may carry the at least one first behavior instruction. After determining the first arguments field from the first destination address field, the first node may identify the at least one first behavior instruction carried in the first arguments field. Each first behavior instruction may indicate one first processing behavior. Each first processing behavior may be a processing behavior for the first packet, or may be a processing behavior that is locally executed by the first node and that is unrelated to the first packet.

Optionally, the first arguments field may include at least one of a first subfield, a second subfield, a third subfield, a fourth subfield, a fifth subfield, and a sixth subfield. Each subfield may carry one first behavior instruction, and first behavior instructions that the six subfields are used to carry may be as follows: The first subfield is used to carry slice information of a network slice; the second subfield is used to carry application-aware information; the third subfield is used to carry information about in-situ flow information telemetry; the fourth subfield is used to carry information about an allocated network resource; the fifth subfield is used to carry an encrypting manner of encrypting and forwarding; and the sixth subfield is used to carry a message authentication code used to perform security verification. In other words, each piece of information in the slice information, the application-aware information, the information about the in-situ flow information telemetry, the information about the network resource, the encrypting manner, and the message authentication code is one first behavior instruction.

The slice information of the network slice may include a slice ID. The application-aware information may also be referred to as application-aware networking (application aware networking, APN) information. The APN information may include at least one of a user group identifier and an application group identifier, and may further include at least one of a flow identifier, a service level agreement (service level agreement, SLA) level, and a service requirement. The service requirement may be a requirement for performance indicators such as a delay and a packet loss rate. The flow identifier is also referred to as a session identifier (session ID).

The information about the in-situ flow information telemetry may include IFIT information, for example, a flow monitoring ID, a packet loss detection flag bit, and a delay detection flag bit. The information about the in-situ flow information telemetry may further include information about in-situ operations, administration, and maintenance (In-situ Operations, Administration, and Maintenance, IOAM). The information about the network resource may include a bandwidth resource of an interface configured to forward the packet. The encrypting manner may include media access control security (media access control security, MACsec) encrypting. The message authentication code may include an HMAC.

Optionally, the first arguments field may further include at least one of an eighth subfield and a ninth subfield. The eighth subfield is used to carry running status information, and the ninth subfield is used to carry information about a to-be-established entry. The running status information may include information used to instruct to adjust a running status of the first node to a sleep state or a power-off state. The information about the to-be-established entry may include information used to instruct the first node to locally create a flow table, a forwarding table, and/or a state table for traffic.

Optionally, the first arguments field may further include at least one compressed segment identifier. The at least one first behavior instruction in the first arguments field may be located behind the at least one compressed segment identifier. For example, the first arguments field may include at least one uSID, and the at least one uSID may be shifted in a packet forwarding process. In addition, the at least one first behavior instruction may be not shifted with the at least one uSID, in other words, a location of the at least one first behavior instruction in the first arguments field is fixed. Alternatively, the at least one first behavior instruction may be shifted together with the at least one uSID.

For example, refer to FIG. 15, the first arguments field may include a total of n-1 uSIDs from a uSID 2 to a uSID n, and a total of m first behavior instructions from a behavior instruction A1 to a behavior instruction Am, where m is an integer greater than or equal to 1. The uSID 2 to the uSID n may be shifted in a packet forwarding process, and the m first behavior instructions are located at a trailer of the first arguments field and may not need to be shifted together with the uSIDs.

Step 207: The first node executes the at least one first processing behavior indicated by the at least one first behavior instruction.

In this embodiment of this application, if the at least one first processing behavior includes a processing behavior for the first packet, the first node may process the first packet according to the at least one first processing behavior. For example, the first node may execute at least one of the following first processing behaviors on the first packet: forwarding the packet based on the slice resource of the network slice; forwarding the packet based on a network service indicated by the application-aware information; performing in-situ flow information telemetry; forwarding the packet based on the allocated network resource; encrypting and forwarding the packet; and performing security verification.

If the at least one first processing behavior includes a processing behavior that is locally executed by the first node and that is unrelated to the first packet, the first node may directly execute the first processing behavior. In addition, the first node executes the first processing behavior without modifying content of the first packet or affecting a forwarding procedure of the first packet. For example, the first node may locally execute at least one of the following first processing behaviors: adjusting the running status of the first node; and locally establishing the flow table, the forwarding table, and/or the state table for the traffic in the first node. The traffic is a service flow to which the first packet belongs, namely, the target service flow.

It may be understood that the at least one first processing behavior may include both the processing behavior for the first packet and the processing behavior that is locally executed by the first node and that is unrelated to the first packet. For example, the at least one first processing behavior may include: performing in-situ flow information telemetry; and establishing the state table for the service flow to which the first packet belongs.

Optionally, the first segment identifier further includes a function field, and the function field may indicate a third processing behavior. After identifying the at least one first behavior instruction carried in the first arguments field and determining the third processing behavior indicated by the function field, the first node may process the first packet according to the third processing behavior. If the at least one first processing behavior includes the processing behavior for the first packet, the first node may process the first packet according to the at least one first processing behavior and the third processing behavior, to obtain a third packet.

The third processing behavior indicated by the function field in the first segment identifier may include behaviors of an End, an End.X, an End.T, an End.DT4, an End.DT6, an End.DT2M, and the like.

Optionally, the first arguments field may be further used to carry a parameter of the third processing behavior. The first arguments field may further retain a function of an original arguments field, and therefore can be effectively compatible with the original function. For example, the first arguments field may further include a seventh subfield. The seventh subfield may be used to carry the parameter of the third processing behavior. The parameter of the third processing behavior may include a parameter of a behavior of the End.DT2M and/or an index of a compressed segment identifier.

The parameter of the behavior of the End.DT2M may be an Arg.FE2 parameter, and the parameter may include a multicast parameter and/or a split horizon parameter. The index of the compressed segment identifier may be a G-SID index (G-SID index, SI).

It may be understood that, if the first segment identifier is a compressed segment identifier, when processing the first packet, the first node further needs to shift the compressed segment identifier. If the first arguments field corresponds to only the first segment identifier, the first arguments field may be shifted together with the first segment identifier. For example, refer to FIG. 13, an arguments field A1 may be shifted with a uSID 1, and an arguments field A2 may be shifted with a uSID 1.

If the first arguments field corresponds to a plurality of compressed segment identifiers, the first arguments field may not be shifted, that is, an encoding location of the first arguments field is fixed, so that another node can read the first arguments field. Alternatively, the first arguments field may be shifted together with the plurality of compressed segment identifiers. This is not limited in this embodiment of this application.

Optionally, the first arguments field may further include a tenth subfield. The tenth subfield is used to carry a shift flag. The shift flag may indicate which bits in the first destination address field need to be shifted. Alternatively, if the first arguments field further includes at least one compressed segment identifier, the shift flag may indicate which bits in the first arguments field need to be shifted.

For example, assuming that the first arguments field is located at the 96^{th} bit to the 127^{th} bit in the first destination address field and the first arguments field is not shifted, the shift flag may instruct to shift the 32^{nd} bit to the 95^{th} bit in the first destination address field. Alternatively, if the first arguments field also needs to be shifted, the shift flag may instruct to shift the 32^{nd} bit to the 127^{th} bit in the first destination address field. It is assumed that the first arguments field is located at the 32^{nd} bit to the 127^{th} bit in the first destination address field, the 32^{nd} bit to the 95^{th} bit are a compressed segment identifier, and the 96^{th} bit to the 127^{th} bit are the first behavior instruction. If the first arguments field is not shifted, the shift flag may instruct to shift the 0^{th} bit to the 63^{rd} bit in the first arguments field. Alternatively, if the first arguments field also needs to be shifted, the shift flag may instruct to shift the 0^{th} bit to the 95^{th} bit in the first destination address field.

In an optional implementation, a structured parameter function may be configured in the first node, and a status of the structured parameter function of the first node may be an enabled state or a disabled state. If the first node determines that the structured parameter function of the first node is in the enabled state, the first node may execute the at least one first processing behavior indicated by the first arguments field.

In this implementation, the status of the structured parameter function of the first node may be locally configured, for example, may be configured by operation and maintenance personnel or a controller. Alternatively, the first packet received by the first node may further include a status enable flag bit, and the first node may enable the structured parameter function of the first node based on the status enable flag bit.

For example, if the first node determines that the structured parameter function of the first node is in the enabled state, the first node may identify the at least one first behavior instruction carried in the first arguments field, and determine the at least one first processing behavior indicated by the at least one first behavior instruction. If the first node determines that the structured parameter function of the first node is in the disabled state, the first node may determine, based on a type of the third processing behavior indicated by the function field in the first segment identifier, whether to process the first arguments field. For example, if a parameter is required for the third processing behavior indicated by the function field, the first node may read the parameter of the third processing behavior from the first arguments field. If no parameter is required for the third processing behavior indicated by the function field, the first node does not need to process the first arguments field.

An encapsulation location of the parameter of the third processing behavior in the first arguments field may be locally configured in the first node, may be preset or fixedly configured in the system, or may be standardized.

In another optional implementation, if the first node determines, based on a behavior (the third processing behavior) or a flavor (flavor) indicated by the function field in the first segment identifier, that the first arguments field is a structured arguments field, the first node may execute the at least one first processing behavior indicated by the first arguments field.

For example, a new SRv6 flavor (flavor) may be defined in the first node. The flavor may be associated with a behavior indicated by a function field in at least one SID, or may be associated with the at least one SID. In addition, all arguments fields corresponding to the at least one SID are structured arguments fields. Based on this, if the first node determines that the third processing behavior indicated by the function field in the first segment identifier is associated with the new flavor, the first node may determine that the first arguments field is a structured arguments field, and then may identify the at least one first behavior instruction carried in the first arguments field. That the flavor is associated with the behavior indicated by the function field in the SID may mean that the behavior indicated by the function field in the SID further includes an additional behavior indicated by the flavor in addition to a conventional SRv6 behavior (behavior). The additional behavior may be a variant (variants of behavior) of the conventional SRv6 behavior, and the additional behavior may include: processing the first arguments field in a manner of processing a structured arguments field.

Step 208: The first node determines the second arguments field from a second destination address field of the second packet.

In this embodiment of this application, after receiving the second packet, the first node may further determine the second arguments field from the second destination address field of the second packet. The second arguments field corresponds to the second segment identifier in the second destination address field.

It may be understood that a process in which the first node determines the second arguments field may be the same as the foregoing process in which the first node determines the first arguments field. Therefore, for an implementation process of step 208, refer to the related descriptions of step 205. Details are not described herein.

Step 209: The first node executes the at least one second processing behavior indicated by the second arguments field.

The at least one second processing behavior may be different from the at least one first processing behavior. Optionally, the first node may first identify the at least one second behavior instruction from the second arguments field, and determine the at least one second processing behavior indicated by the at least one second behavior instruction. Then, the first node may execute the at least one second processing behavior. For example, the first node may process the second packet according to the at least one second processing behavior. Alternatively, the first node may locally execute at least one second processing behavior unrelated to the second packet.

The at least one second processing behavior may include at least one of the following behaviors: forwarding the packet based on a slice resource of a network slice; forwarding the packet based on a network service indicated by application-aware information; performing in-situ flow information telemetry; forwarding the packet based on an allocated network resource; encrypting and forwarding the packet; and performing security verification.

Alternatively, the at least one second processing behavior may include at least one of the following behaviors: adjusting a running status of the first node; and locally establishing a flow table, a forwarding table, and/or a state table for traffic in the first node.

It may be understood that a process in which the first node determines the at least one second processing behavior indicated by the second arguments field may be the same as the process in which the first node determines the at least one first processing behavior indicated by the first arguments field. Therefore, for an implementation process of step 209, refer to the related descriptions of step 206 and step 207.

Step 210: The first node sends a third packet to the second node.

After step 207, the first node may send the third packet to the second node. The third packet is a packet obtained based on the first packet. The second node may be a next-hop node of the first node. A third destination address field of the third packet may include a third segment identifier, and the third segment identifier may be a local SID of the second node.

Optionally, both the first segment identifier and the third segment identifier may be SRv6 SIDs whose lengths are 128 bits, or both the first segment identifier and the third segment identifier may be compressed segment identifiers. For example, refer to FIG. 12 and FIG. 13, the first segment identifier may be a uSID 1, and the second segment identifier may be a uSID 2. Alternatively, refer to FIG. 14, the first segment identifier may be a G-SID 0, and the second segment identifier may be a G-SID 1.

Step 211: The second node determines a third arguments field from the third destination address field of the third packet.

The third arguments field corresponds to the third segment identifier, and a manner in which the second node determines the third arguments field may be the same as the foregoing manner in which the first node determines the first arguments field. Therefore, details are not described herein.

It may be understood that, if the third segment identifier is an SRv6 SID whose length is 128 bits, the third arguments field may be included in the third segment identifier. Alternatively, if the third segment identifier is a compressed segment identifier, and the third destination address field has one arguments field corresponding to each uSID, the third arguments field may be adjacent to the third segment identifier and located behind the third segment identifier. In addition, in the two implementations, the third arguments field and the first arguments field are different fields.

If the third segment identifier is a G-SID, or if the third segment identifier is a uSID, and a plurality of uSIDs in the third destination address field share one arguments field, the third arguments field and the first arguments field may be a same field. For example, refer to FIG. 12, both the first arguments field and the third arguments field are A0.

Step 212: The second node executes at least one fourth processing behavior indicated by the third arguments field.

In this embodiment of this application, a process in which the second node determines the at least one fourth processing behavior indicated by the third arguments field may be the same as the process in which the first node determines the at least one first processing behavior indicated by the first arguments field. Therefore, for an implementation process of step 212, refer to the related descriptions of step 206 and step 207.

It may be understood that if the third arguments field and the first arguments field are a same field, the at least one fourth processing behavior may be the same as the at least one first processing behavior. Therefore, one arguments field may be used to instruct different nodes in the forwarding path to execute a same processing behavior. For example, refer to FIG. 12, all n nodes indicated by a uSID 1 to a uSID n may execute a same processing behavior under instruction of an arguments field A0.

If the third arguments field and the first arguments field are different fields, the at least one fourth processing behavior may be the same as or different from the at least one first processing behavior. If the at least one fourth processing behavior is the same as the at least one first processing behavior, different arguments fields may be used to enable all different nodes in the forwarding path to execute a same processing behavior. For example, refer to FIG. 2, SIDs carried in a segment list [0] to a segment list [n] may all include a same arguments field, so that all different nodes in the forwarding path execute a same processing behavior. If the at least one fourth processing behavior is different from the at least one first processing behavior, different arguments fields may be used to enable different nodes in the forwarding path to execute different processing behaviors. For example, refer to FIG. 13, arguments fields A1 to An in a destination address field may not be completely the same, so that different nodes in the forwarding path can execute different processing behaviors.

It may be further understood that, after step 209, the first node may also send, to the second node, a fourth packet obtained after the second packet is processed. A fourth destination address field of the fourth packet includes a fourth segment identifier. The second node may determine, from the fourth destination address field, a fourth arguments field corresponding to the fourth segment identifier, and execute at least one processing behavior indicated by the fourth arguments field. For a process in which the second node executes the at least one processing behavior indicated by the fourth arguments field, refer to step 211 and step 212. Details are not described herein.

It may be further understood that the packet forwarding system may include a node that supports the SRv6 forwarding technology, and may also include a node that does not support the SRv6 forwarding technology. A structured parameter function of the node that supports the SRv6 forwarding technology may be in an enabled state, or may be in a disabled state. Based on this, if a node in the packet forwarding system needs to identify and parse a structured arguments field, the node that does not support the SRv6 forwarding technology and a node that supports the SRv6 forwarding technology and whose structured parameter function is in the disabled state may be avoided during planning of a packet forwarding path.

Alternatively, if the packet forwarding path needs to include the node that does not support the SRv6 forwarding technology or the node whose structured parameter function is in the disabled state, a local configuration manner may be used, so that the node can read and parse some bits in a destination address field of a packet as a structured arguments field. That is, the node may determine the structured arguments field from the destination address field of the packet by using local configuration information, and identify at least one behavior instruction in the structured arguments field. Because the node identifies and parses the structured arguments field based on the local configuration information, the structured arguments field is not associated with an SRv6 function anymore, but is associated with a function indicated by the configuration information, or is implemented as an independent function.

The following describes a process in which the first node identifies the at least one first behavior instruction from the first arguments field in step 206.

In a first possible implementation, a first arguments field template is preconfigured in the first node, and the first node may identify, based on the first arguments field template, at least one subfield included in the first arguments field, and then identify at least one first behavior instruction carried in the at least one subfield. The first arguments field template is used to define a type, a location, and/or a length of the at least one first behavior instruction carried in the first arguments field. Alternatively, it may be understood that the first arguments field template is used to define a type, a location, and/or a length of the at least one subfield included in the first arguments field.

If the first arguments field template does not define the type of the at least one first behavior instruction included in the first arguments field, a type of each first behavior instruction included in the first arguments field may be preconfigured in the first node through hardcoding. For example, a first behavior instruction is of a type A, and a second behavior instruction is of a type B.

If the first arguments field template does not define the location of the at least one first behavior instruction included in the first arguments field, a location of each first behavior instruction included in the first arguments field may be preconfigured in the first node through hardcoding. Alternatively, the location of the at least one first behavior instruction may be the same as a sequence in which the first arguments field template defines the type and the length of the at least one first behavior instruction. For example, assuming that the first row in the first arguments field template defines a length of a behavior instruction A, the second row defines a length of a behavior instruction B, and the third row defines a length of a behavior instruction C, the three behavior instructions carried in the first arguments field may be arranged in a sequence of the behavior instruction A, the behavior instruction B, and the behavior instruction C.

If the first arguments field template does not define the length of the at least one first behavior instruction included in the first arguments field, a length of each first behavior instruction included in the first arguments field may be preconfigured in the first node through hardcoding. For example, the length of each first behavior instruction may be n bits, where n is an integer greater than 1. Alternatively, lengths of first behavior instructions included in the first arguments field may be equal. In this case, the first node may determine a length of each first behavior instruction based on a total length of the first arguments field and a quantity of first behavior instructions carried in the first arguments field. For example, assuming that the length of the first arguments field is z bits, and the first node determines, based on the first arguments field template, that the first arguments field carries m first behavior instructions, the first node may determine that the length of each first behavior instruction is z/m bits. z is an integer greater than 1, and m is an integer greater than or equal to 1.

It is assumed that the length of the first arguments field is z bits. For example, z may be 32. Refer to FIG. 16, the arguments field template may provide the following definitions: In the first arguments field, the first bit to an x^{th} bit are used to carry a first behavior instruction X, an (x+1)^{th} bit to a y^{th} bit are used to carry a first behavior instruction Y, and a (y+1)^{th} bit to a z^{th} bit are used to carry a first behavior instruction Z. x and y meet 0<x<y<z. The first node may identify the first behavior instruction X, the first behavior instruction Y, and the first behavior instruction Z from the first arguments field based on the arguments field template shown in FIG. 16.

For example, assuming that the length of the first arguments field is 32 bits, in other words, z=32, and the first arguments field needs to carry slice information of a network slice, APN information, and information about in-situ flow information telemetry, the first arguments field template may provide the following definitions: The 1^{st} bit to the 8^{th} bit are a first subfield and are used to carry the slice information, the 9^{th} bit to the 24^{th} bit are a second subfield and are used to carry the APN information, and the 25^{th} bit to the 32^{nd} bit are a third subfield and are used to carry the information about the in-situ flow information telemetry.

As a first example of the first implementation, a plurality of different arguments field templates (template) and a template identifier corresponding to each arguments field template may be preconfigured in the first node. The first arguments field further includes a template identifier, namely, a template ID. After determining the first arguments field from the destination address field, the first node may first identify the template ID from the first arguments field, and then determine, based on a correspondence between the template ID and the first parameter template, the first parameter template used to identify the first arguments field. Then, the first node may identify the at least one first behavior instruction in the first arguments field based on the first arguments field.

It may be understood that a location of the template ID in the first arguments field is preconfigured in the first node, and the first node may directly identify the template ID from the first arguments field based on the preconfigured location. For example, the last one or more bits in the first arguments field may be used to carry the template ID.

It may be further understood that first behavior instructions of different quantities, different types, and/or different lengths may be carried in the first arguments field of a fixed length based on different arguments field templates. Therefore, flexibility of carrying the behavior instruction in the first arguments field is effectively improved, thereby improving flexibility of executing the processing behavior by the node.

As a second example of the first implementation, a plurality of different arguments field templates and a behavior or a flavor indicated by a segment identifier corresponding to each arguments field template may be preconfigured in the first node. The first node may determine, based on a correspondence between a behavior or a flavor indicated by the first segment identifier and the first arguments field template, the first arguments field template used to identify the first arguments field. The behavior indicated by the segment identifier may be a behavior indicated by a function field in the segment identifier.

In this example, the first node may directly determine the corresponding first arguments field template based on the first segment identifier. Therefore, no template ID needs to be carried in the first arguments field, so that more bits can be reserved for the first behavior instruction.

Optionally, a plurality of SRv6 flavors may be defined in the first node, and each flavor corresponds to (is associated with) one arguments field template. In addition, each flavor is associated with a behavior indicated by one segment identifier, or each flavor is associated with one segment identifier. The behavior indicated by the segment identifier may be a processing behavior indicated by a function field in the segment identifier, and the processing behavior may include a conventional SRv6 behavior (behavior) and an additional behavior indicated by a flavor associated with the segment identifier. The additional behavior may include: parsing the first arguments field based on a specified arguments field template.

For example, a total of two flavors, namely, a flavor 1 and a flavor 2, may be defined in the first node. The flavor 1 is associated with a template 1 and associated with a first segment identifier SID 1, and the flavor 2 is associated with a template 2 and associated with a second segment identifier SID 2. In addition, the template 1 defines a total of two first behavior instructions for carrying slice information and APN information in an arguments field, and an arrangement sequence and lengths of the two behavior instructions. The template 2 defines a second behavior instruction for carrying information about in-situ flow information telemetry in an arguments field, and a location, a name, and a length of each field included in the information about the in-situ flow information telemetry.

Based on this, if the first segment identifier in the first destination address field of the first packet received by the first node is the SID 1, the first node may parse, by using the template 1, the first arguments field corresponding to the SID 1, to identify the two first behavior instructions, namely, the slice information and the APN information, in the first arguments field. If the second segment identifier in the second destination address field of the second packet received by the first node is the SID 2, the first node may parse, by using the template 2, the second arguments field corresponding to the SID 2, to identify the second behavior instruction, namely, the information about the in-situ flow information telemetry, in the second arguments field.

It may be understood that, in the first implementation, arguments field templates may be configured in all or some nodes in the packet forwarding system. Some nodes may be nodes that need to parse structured arguments fields.

In a second possible implementation, the first arguments field may include at least one flag bit in a bitmap (bitmap) form, and each flag bit corresponds to one first behavior instruction. As a first example, each flag bit may indicate whether the first arguments field carries a first behavior instruction corresponding to the flag bit. As a second example, each flag bit may indicate whether a corresponding behavior instruction in the first arguments field can be identified. If a flag bit indicates that a behavior instruction corresponding to the flag bit can be identified, it indicates that the behavior instruction is valid; or if a flag bit indicates that a behavior instruction corresponding to the flag bit cannot be identified, it indicates that the behavior instruction is invalid (invalid).

For example, if a value of a flag bit is 1, it indicates that the first arguments field carries a corresponding first behavior instruction, or the corresponding first behavior instruction in the first arguments field can be identified, that is, the first behavior instruction is valid. If a value of a flag bit is 0, it indicates that the first arguments field does not carry a corresponding first behavior instruction, or the corresponding first behavior instruction cannot be identified.

That the first behavior instruction cannot be identified may include the following several cases: Case 1: The first behavior instruction is invalid. Case 2: The first behavior instruction has been executed, and the first node does not need to execute the first behavior instruction. Case 3: The first node is not required to execute the first behavior instruction, or the first node needs to ignore the first behavior instruction.

It may be understood that, in the foregoing first example, if a flag bit indicates that the first arguments field does not carry a corresponding first behavior instruction, it indicates that the first behavior instruction does not occupy encoding space of the first arguments field. The encoding space may be used for another purpose, or may be left as a reserved field. In the foregoing second example, if a flag bit indicates that a corresponding first behavior instruction in the first arguments field cannot be identified, the first behavior instruction still exists in the first arguments field, that is, still occupies encoding space of the first arguments field, but the first node does not identify and execute the first behavior instruction.

It may be further understood that, in the second implementation, the first node may first identify at least one flag bit carried in the first arguments field, and then identify, based on the at least one flag bit, the at least one first behavior instruction carried in the first arguments field. For example, the first node may determine at least one flag bit whose value is 1, and then identify at least one first behavior instruction corresponding to the at least one flag bit whose value is 1.

Optionally, flag bits in the first arguments field may be encoded starting from a most significant bit. For example, refer to (a) in FIG. 17, three flag bits S, A, and I included in the first arguments field may be located at most significant bits. Alternatively, flag bits in the first arguments field may be encoded starting from a least significant bit. For example, refer to (b) in FIG. 17, three flag bits S, A, and I included in the first arguments field may be located at least significant bits. Alternatively, flag bits in the first arguments field may be encoded at any other locations. For example, refer to (c) in FIG. 17, three flag bits S, A, and I included in the first arguments field may be located at middle bits.

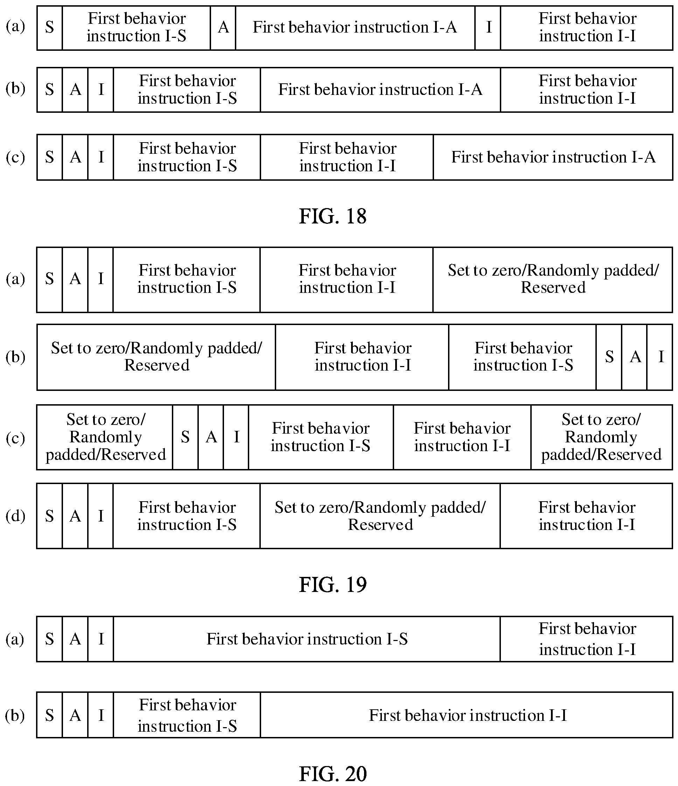

Optionally, flag bits in the first arguments field may be consecutively arranged. For example, refer to (a) to (c) in FIG. 17, three flag bits S, A, and I in the first arguments field occupy three consecutive bits. Alternatively, flag bits in the first arguments field may be loosely arranged. For example, refer to (a) in FIG. 18, three flag bits S, A, and I in the first arguments field may be arranged at intervals, and a bit behind each flag bit is a first behavior instruction corresponding to the flag bit.

In this embodiment of this application, an arrangement order of first behavior instructions in the first arguments field may be the same as or different from an arrangement order of corresponding flag bits. For example, it is assumed that a flag bit S in the first arguments field corresponds to a first behavior instruction I-S, a flag bit A corresponds to a first behavior instruction I-A, and a flag bit I corresponds to a first behavior instruction I-I. In this case, refer to (a) and (b) in FIG. 18, the three flag bits in the first arguments field are arranged in a sequence of S, A, and I, and the three first behavior instructions corresponding to the three flag bits may be arranged in a sequence of the first behavior instruction I-S, the first behavior instruction I-A, and the first behavior instruction I-I. Alternatively, refer to (c) in FIG. 18, the three first behavior instructions corresponding to the three flag bits may be arranged in a sequence of the first behavior instruction I-S, the first behavior instruction I-I, and the first behavior instruction I-A.

It may be understood that, if the first arguments field does not carry a first behavior instruction corresponding to a flag bit, another first behavior instruction may be padded, to form a compact field arrangement. Alternatively, another first behavior instruction may not be padded, to form a dispersed or fixed location arrangement.

For example, refer to (a), (b), and (c) in FIG. 19, if the first arguments field does not carry a first behavior instruction I-A, three flag bits S, A, and I and two remaining first behavior instructions I-S and I-I in the first arguments field may be consecutively arranged. Alternatively, refer to (d) in FIG. 19, if the first arguments field does not carry a first behavior instruction I-A, two remaining two first behavior instructions I-S and I-I in the first arguments field may not need to be padded, but are reserved at original fixed locations.

In a scenario in which the first arguments field does not carry a first behavior instruction corresponding to a flag bit, as a possible example, refer to (a) to (d) in FIG. 19, a redundant bit (an idle bit) in the first arguments field may be set to zero, randomly padded, or reserved. The reservation may mean keeping original padded content of the bit unchanged.

As another possible example, a redundant bit in the first arguments field may be occupied by another first behavior instruction. In this way, a length of the another first behavior instruction can be effectively increased, so that the another first behavior instruction includes more information. For example, refer to (a) in FIG. 20, if the first arguments field does not carry a first behavior instruction I-A, a first behavior instruction I-S located in front of the first behavior instruction I-A may occupy bits originally used to carry the first behavior instruction I-A. Alternatively, refer to (b) in FIG. 20, a first behavior instruction I-I located behind the first behavior instruction I-A may occupy bits originally used to carry the first behavior instruction I-A.

In the second implementation, a location and a length of each flag bit in the first arguments field, and a type, a location, and a length of a first behavior instruction corresponding to each flag bit may be standardized and unified, or may be customized in a network domain.

It may be learned from the foregoing two implementations that, compared with a solution in which a conventional arguments field is used to carry only a parameter of a processing behavior indicated by a function field, in the solution provided in this embodiment of this application, the first arguments field can independently indicate a processing behavior, and a quantity and types of behavior instructions carried in the first arguments field can be flexibly adjusted. Therefore, flexibility of executing, by the first node, the processing behavior based on the indication of the first arguments field is effectively improved.

It may be understood that, if the first arguments field further includes other information in addition to the at least one first behavior instruction, for example, further includes the parameter of the third processing behavior, the shift flag, and/or the at least one compressed segment identifier, the first node may also identify the other information in the first arguments field based on either of the foregoing two implementations.

It may be further understood that, in step 209, the first node may parse the second arguments field by using a second arguments field template or a bitmap, to identify the at least one second behavior instruction. The second arguments field template may be determined based on a template ID in the second arguments field, or may be determined based on a behavior indicated by the second segment identifier. In addition, the second arguments field template may be the same as or different from the first arguments field template.

It may be further understood that a sequence of the steps of the packet forwarding method provided in this embodiment of this application may be properly adjusted, or addition or deletion may be correspondingly performed on the steps based on a case. For example, step 203 and step 204 may be performed before step 202. Alternatively, step 203 and step 204, and step 208 and step 209 may be deleted based on a case. Alternatively, step 211 and step 212 may be deleted based on a case, that is, the third node may not need to identify and parse the third arguments field.

It may be further understood that the first packet, the second packet, the third packet, and the fourth packet are merely used to distinguish between different packets, the first arguments field, the second arguments field, the third arguments field, and the fourth arguments field are merely used to distinguish between arguments fields in different packets, and the first processing behavior, the second processing behavior, the third processing behavior, and the fourth processing behavior are merely used to distinguish between processing behaviors indicated by different fields. In some embodiments, the third packet may also be referred to as a second packet, the third arguments field may also be referred to as a second arguments field, and the fourth processing behavior may also be referred to as a second processing behavior.

In conclusion, this embodiment of this application provides the packet forwarding method. The destination address field of the first packet received by the first node includes the first segment identifier, and the first node can determine, from the destination address field, the first arguments field corresponding to the first segment identifier, and can execute the at least one first processing behavior indicated by the first arguments field. In the method provided in this embodiment of this application, the processing behavior can be indicated by using the first arguments field in the destination address field. Therefore, compared with a method in which a processing behavior is indicated by additionally inserting an IPv6 extension header or extended TLV, a length of a packet header can be effectively reduced, thereby improving data transmission efficiency. In addition, because the first arguments field is a structured arguments field that can indicate one or more first processing behaviors, the first arguments field can instruct the first node to execute relatively abundant processing behaviors.

In addition, in a scenario in which the first segment identifier is a compressed segment identifier, if a forwarding path of the first packet can be encoded in the destination address field, no SRH needs to be inserted into the first packet. In this case, although instruction information indicating a packet processing behavior cannot be carried by using an optional TLV field in an SRH or some DOHs, the first arguments field in the destination address field can be used to instruct the first node to execute abundant processing behaviors.

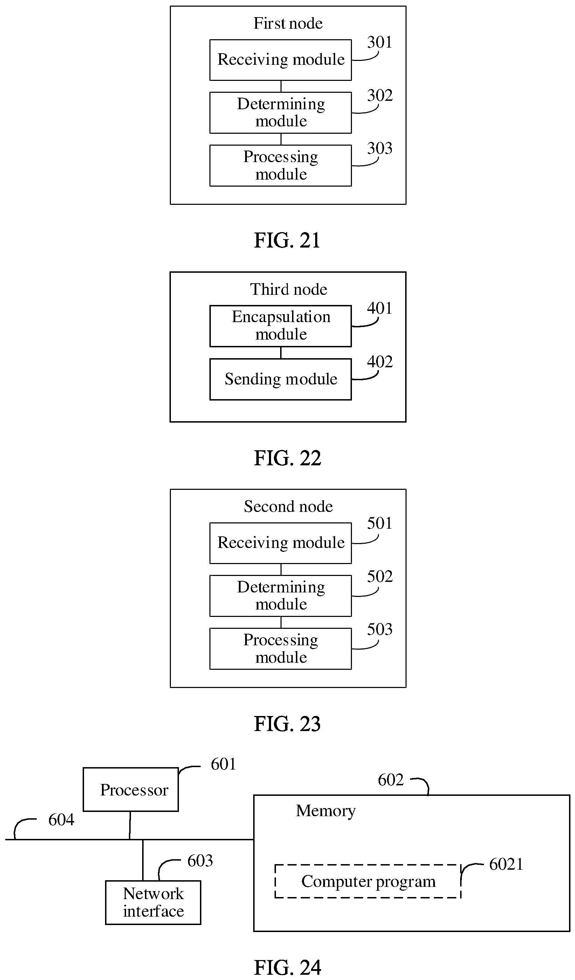

FIG. 21 is a schematic diagram of a structure of a first node according to an embodiment of this application. The first node may be used in the packet forwarding system shown in FIG. 1, and may implement the steps performed by the first node in the foregoing method embodiments. Refer to FIG. 21, the first node includes a receiving module 301, a determining module 302, and a processing module 303.

The receiving module 301 is configured to receive a first packet, where a first destination address field of the first packet includes a first segment identifier. For function implementation of the receiving module 301, refer to the related descriptions of step 101 and step 202 in the foregoing method embodiments.

The determining module 302 is configured to determine a first arguments field from the first destination address field, where the first arguments field corresponds to the first segment identifier. For function implementation of the determining module 302, refer to the related descriptions of step 102 and step 205 in the foregoing method embodiment.

The processing module 303 is configured to execute at least one first processing behavior indicated by the first arguments field. For function implementation of the processing module 303, refer to the related descriptions of step 103 in the foregoing method embodiments.

Optionally, the processing module 303 may be configured to: identify at least one behavior instruction carried in the first arguments field, and execute the at least one first processing behavior indicated by the at least one behavior instruction. For function implementation of the processing module 303, further refer to the related descriptions of step 206 and step 207 in the foregoing method embodiments.

Optionally, the processing module 303 may be configured to identify, based on an arguments field template, the at least one behavior instruction carried in the first arguments field. The arguments field template is used to define a type, a location, and/or a length of the at least one behavior instruction carried in the first arguments field.

Optionally, the first arguments field may further include a template identifier, and the processing module 303 may be further configured to determine the arguments field template based on a correspondence between the template identifier and the arguments field template.

Optionally, the processing module 303 may be further configured to determine the arguments field template based on a correspondence between a behavior or a flavor indicated by the first segment identifier and the arguments field template.

Optionally, the processing module 303 may be configured to: identify at least one flag bit carried in the first arguments field, and identify, based on the at least one flag bit, the at least one behavior instruction carried in the first arguments field. Each flag bit corresponds to one behavior instruction, and indicates whether the first arguments field carries the corresponding behavior instruction, or indicates whether the corresponding behavior instruction in the first arguments field can be identified.

Optionally, the processing module 303 may be configured to: on a basis that a structured parameter function of the first node is in an enabled state, execute the at least one first processing behavior indicated by the first arguments field; or determine, based on a behavior or a flavor indicated by a function field in the first segment identifier, that the first arguments field is a structured arguments field, and execute the at least one first processing behavior indicated by the first arguments field.

Optionally, the first segment identifier is a compressed segment identifier, and a length of the compressed segment identifier is less than 128 bits; or a length of the first segment identifier is 128 bits.

Optionally, the first arguments field is included in the first segment identifier, or the first arguments field is located behind the first segment identifier.

Optionally, the first packet belongs to a target service flow. The receiving module 301 may be further configured to receive a second packet of the target service flow, where a second destination address field of the second packet includes a second segment identifier. For function implementation of the receiving module 301, further refer to the related descriptions of step 204 in the foregoing method embodiments.

The determining module 302 may be further configured to determine a second arguments field from the second destination address field, where the second arguments field corresponds to the second segment identifier. For function implementation of the determining module 302, further refer to the related descriptions of step 208 in the foregoing method embodiments.

The processing module 303 may be further configured to execute at least one second processing behavior indicated by the second arguments field. The at least one second processing behavior is different from the at least one first processing behavior. For function implementation of the processing module 303, further refer to the related descriptions of step 209 in the foregoing method embodiments.

Optionally, the first segment identifier may further include a function field, and the function field indicates a third processing behavior. The processing module 303 may be further configured to process the first packet according to the third processing behavior.

Optionally, the first arguments field is further used to carry a parameter of the third processing behavior.

Optionally, the parameter of the third processing behavior may include a parameter of a behavior of an End.DT2M and/or an index of a compressed segment identifier.

Optionally, the processing module 303 may be configured to process the first packet according to the at least one first processing behavior indicated by the first arguments field.

Optionally, the at least one first processing behavior includes at least one of the following behaviors: forwarding the packet based on a slice resource of a network slice; forwarding the packet based on a network service indicated by application-aware information; performing in-situ flow information telemetry; forwarding the packet based on an allocated network resource; encrypting and forwarding the packet; and performing security verification.

Optionally, the first arguments field includes at least one of a first subfield, a second subfield, a third subfield, a fourth subfield, a fifth subfield, and a sixth subfield. The first subfield is used to carry slice information of the network slice; the second subfield is used to carry the application-aware information; the third subfield is used to carry information about the in-situ flow information telemetry; the fourth subfield is used to carry information about the allocated network resource; the fifth subfield is used to carry an encrypting manner of the encrypting and forwarding; and the sixth subfield is used to carry a message authentication code used to perform the security verification.

Optionally, the first arguments field further includes a seventh subfield. The seventh subfield is used to carry the parameter of the third processing behavior indicated by the function field in the first segment identifier.

Optionally, the at least one first processing behavior may further include at least one of the following behaviors: adjusting a running status of the first node; and locally establishing a flow table, a forwarding table, and/or a state table for traffic in the first node.

Optionally, the determining module 302 may be configured to: on a basis of determining that the first segment identifier is a local SID of the first node, determine the first arguments field from the first destination address field.

Optionally, the first node does not support an SRv6 forwarding technology, and the determining module 302 may be configured to determine the first arguments field from the first destination address field based on local configuration information of the first node.

Optionally, the first arguments field may further include at least one compressed segment identifier, for example, include at least one uSID.

In conclusion, this embodiment of this application provides the first node. The destination address field of the first packet received by the first node includes the first segment identifier, and the first node can determine, from the destination address field, the first arguments field corresponding to the first segment identifier, and can execute the at least one first processing behavior indicated by the first arguments field. In the solutions provided in this embodiment of this application, the processing behavior can be indicated by using the first arguments field in the destination address field. Therefore, compared with a method in which a processing behavior is indicated by additionally inserting an IPv6 extension header or extended TLV, a length of a packet header can be effectively reduced, thereby improving data transmission efficiency. In addition, because the first arguments field is a structured arguments field that can indicate one or more first processing behaviors, the first arguments field can instruct the first node to execute relatively abundant processing behaviors.

FIG. 22 is a schematic diagram of a structure of a third node according to an embodiment of this application. The third node may be used in the packet forwarding system shown in FIG. 1, and may implement the steps performed by the third node in the foregoing method embodiments. Refer to FIG. 22, the first node includes an encapsulation module 401 and a sending module 402.

The encapsulation module 401 is configured to encapsulate a first segment identifier into a first packet. For function implementation of the encapsulation module 401, refer to the related descriptions of step 201 in the foregoing method embodiments.

The sending module 402 is configured to send the first packet, so that a node receiving the first packet determines a first arguments field from a first destination address field of the first packet, and executes at least one first processing behavior indicated by the first arguments field. The first arguments field corresponds to the first segment identifier. For function implementation of the sending module 402, refer to the related descriptions of step 202 in the foregoing method embodiments.

Optionally, the encapsulation module 401 may be configured to encapsulate the first segment identifier into the first destination address field; or encapsulate an SRH into the first packet, where the SRH includes the first segment identifier.

Optionally, the first packet belongs to a target service flow, and the encapsulation module 401 may be further configured to encapsulate a second segment identifier into a second packet of the target service flow. For function implementation of the encapsulation module 401, further refer to the related descriptions of step 203 in the foregoing method embodiments.

The sending module 402 may be further configured to send the second packet, so that a node receiving the second packet determines a second arguments field from a second destination address field of the second packet, and executes at least one second processing behavior indicated by the second arguments field. The second arguments field corresponds to the second segment identifier, and the at least one second processing behavior is different from the at least one first processing behavior. For function implementation of the sending module 402, further refer to the related descriptions of step 204 in the foregoing method embodiments.

Optionally, a node indicated by the first segment identifier is the same as a node indicated by the second segment identifier.

Optionally, the first segment identifier is a compressed segment identifier, and a length of the compressed segment identifier is less than 128 bits; or a length of the first segment identifier is 128 bits.

Optionally, the first arguments field is included in the first segment identifier, or the first arguments field is located behind the first segment identifier.

In conclusion, this embodiment of this application provides the third node. The third node can encapsulate the first segment identifier into the first packet, and the node receiving the first packet can determine, from the destination address field of the first packet, the first arguments field corresponding to the first segment identifier, and can execute the at least one first processing behavior indicated by the first arguments field. In the solutions provided in this embodiment of this application, the processing behavior can be indicated by using the first arguments field in the destination address field. Therefore, compared with a method in which a processing behavior is indicated by additionally inserting an IPv6 extension header or extended TLV, a length of a packet header can be effectively reduced, thereby improving data transmission efficiency. In addition, because the first arguments field is a structured arguments field that can indicate one or more first processing behaviors, the first arguments field can instruct the first node to execute relatively abundant processing behaviors.

FIG. 23 is a schematic diagram of a structure of a second node according to an embodiment of this application. The second node may be used in the packet forwarding system shown in FIG. 1, and may implement the steps performed by the second node in the foregoing method embodiments. Refer to FIG. 23, the second node includes a receiving module 501, a determining module 502, and a processing module 503.

The receiving module 501 is configured to receive a second packet sent by a first node, where a second destination address field of the second packet includes a second segment identifier. The second packet is obtained based on a first packet received by the first node. For function implementation of the receiving module 501, refer to the related descriptions of step 210 in the foregoing method embodiments.

The determining module 502 is configured to determine a second arguments field from the second destination address field, where the second arguments field corresponds to the second segment identifier. For function implementation of the determining module 502, refer to the related descriptions of step 211 in the foregoing method embodiments.

The processing module 503 is configured to execute at least one second processing behavior indicated by the second arguments field. For function implementation of the processing module 503, refer to the related descriptions of step 212 in the foregoing method embodiments.

Optionally, a first arguments field and the second arguments field may be a same field.

Optionally, the at least one first processing behavior is the same as the at least one second processing behavior.

Optionally, both the first segment identifier and the second segment identifier are compressed segment identifiers, and a length of the compressed segment identifier is less than 128 bits; or both a length of the first segment identifier and a length of the second segment identifier are 128 bits.

Optionally, the first arguments field is included in the first segment identifier, and the second arguments field is included in the second segment identifier; or the first arguments field is located behind the first segment identifier, and the second arguments field is located behind the second segment identifier.

In conclusion, this embodiment of this application provides the second node. The destination address field of the second packet received by the second node includes the second segment identifier, and the second node can determine, from the destination address field, the second arguments field corresponding to the second segment identifier, and can execute the at least one second processing behavior indicated by the second arguments field. In the solutions provided in this embodiment of this application, the processing behavior can be indicated by using the first arguments field in the destination address field. Therefore, compared with a method in which a processing behavior is indicated by additionally inserting an IPv6 extension header or extended TLV, a length of a packet header can be effectively reduced, thereby improving data transmission efficiency.

It may be clearly understood by a person skilled in the art that, for the purpose of convenient and brief description, for detailed working processes of the foregoing first node, second node, third node, and modules, refer to the corresponding processes in the foregoing method embodiments. Details are not described herein again.

It should be understood that the first node, the second node, and the third node provided in embodiments of this application may be alternatively implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), generic array logic (generic array logic, GAL), or any combination thereof. In addition, the packet receiving method, the packet sending method, or the packet forwarding method provided in the foregoing method embodiments may be alternatively implemented by using software. When the method provided in the foregoing method embodiments is implemented by using software, each functional module in the first node, the second node, and the third node may be a software module.

FIG. 24 is a schematic diagram of a structure of a network device according to an embodiment of this application. The network device may be used in the system shown in FIG. 1, and may be a first node, a second node, or a third node in the system. Refer to FIG. 24, the network device includes a processor 601, a memory 602, a network interface 603, and a bus 604.

The memory 602 stores a computer program 6021, and the computer program 6021 is used to implement various application functions. The processor 601 is configured to execute the computer program 6021 to implement the method that is provided in the foregoing method embodiments and that is applied to the first node, the second node, or the third node. For example, the processor 601 is configured to execute the computer program 6021 to implement the functions of the modules in the node shown in FIG. 21, FIG. 22, or FIG. 23.

The processor 601 may be a central processing unit (central processing unit, CPU), or the processor 601 may be another general purpose processor, a digital signal processor (digital signal processor, DSP), an ASIC, an FPGA, a graphics processing unit (graphics processing unit, GPU), another programmable logic device, a discrete gate, a transistor logic device, a discrete hardware component, or the like. The general purpose processor may be a microprocessor or any conventional processor.

The memory 602 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

There may be a plurality of network interfaces 603, and the network interface 603 is configured to implement a communication connection (which may be wired or wireless) to another device. In this embodiment of this application, the network interface 603 is configured to send/receive a packet. The another device may be a device such as a terminal, a server, or a VM, or another network device.

The bus 604 is configured to connect the processor 601, the memory 602, and the network interface 603. In addition, in addition to a data bus, the bus 604 may further include a power bus, a control bus, a status signal bus, and the like. However, for clear description, various types of buses are all marked as the bus 604 in the figure.

If the network device is a first node, the processor 601 is configured to receive a first packet through the network interface 603, where a first destination address field of the first packet includes a first segment identifier; and is configured to: determine a first arguments field from the first destination address field, and execute at least one first processing behavior indicated by the first arguments field. The first arguments field corresponds to the first segment identifier. For a detailed processing process of the processor 601, refer to the steps performed by the first node in the method embodiments shown in FIG. 10 and FIG. 11. Details are not described herein again.

If the network device is a third node, the processor 601 is configured to: encapsulate a first segment identifier into a first packet, and send the first packet, so that a node receiving the first packet determines a first arguments field from a first destination address field of the first packet, and executes at least one first processing behavior indicated by the first arguments field. The first arguments field corresponds to the first segment identifier. For a detailed processing process of the processor 601, refer to the steps performed by the third node in the method embodiment shown in FIG. 11. Details are not described herein again.

If the network device is a second node, the processor 601 is configured to: receive, through the network interface 603, a second packet sent by a first node, where a second destination address field of the second packet includes a second segment identifier; and determine a second arguments field from the second destination address field, and execute at least one second processing behavior indicated by the second arguments field. The second arguments field corresponds to the second segment identifier. For a detailed processing process of the processor 601, refer to the steps performed by the second node in the method embodiment shown in FIG. 11. Details are not described herein again.

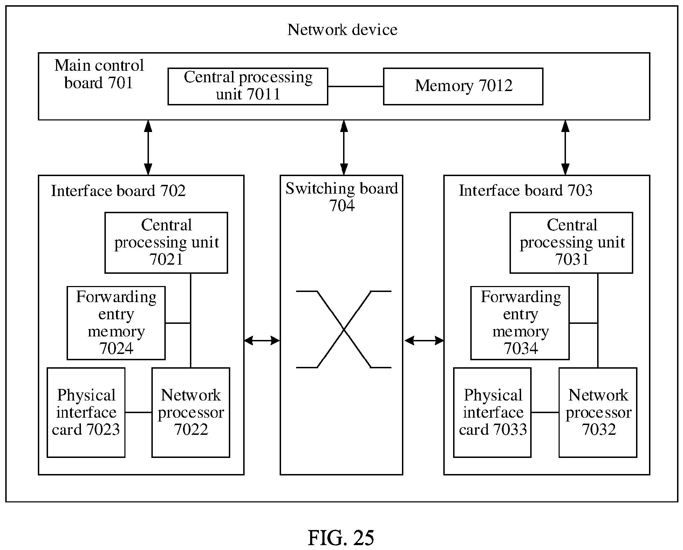

FIG. 25 is a schematic diagram of a structure of another network device according to an embodiment of this application. The network device may be used in the system shown in FIG. 1, and may be a first node, a second node, or a third node in the system. As shown in FIG. 25, the network device may include a main control board 701 and at least one interface board (the interface board is also referred to as a line card or a service board). For example, FIG. 25 shows an interface board 702 and an interface board 703. In a case of a plurality of interface boards, the network device may further include a switching board 704, and the switching board 704 is configured to complete data exchange between interface boards.

The main control board 701 is also referred to as a main processing unit (main processing unit, MPU) or a route processor card (route processor card). The main control board 701 is configured to complete functions such as system management, device maintenance, and protocol processing. The main control board 701 mainly includes three types of functional units: a system management and control unit, a system clock unit, and a system maintenance unit. The main control board 701 includes a central processing unit 7011 and a memory 7012.

The interface boards 702 and 703 are also referred to as line processing units (line processing unit, LPU), line cards (line card), or service boards. The interface board is configured to provide various service interfaces and implement packet forwarding. The service interfaces provided by the interface board may include a packet over SONET/SDH (packet over SONET/SDH, POS) interface, a gigabit Ethernet (gigabit Ethernet, GE) interface, an asynchronous transfer mode (asynchronous transfer mode, ATM) interface, and the like. SONET means a synchronous optical network (synchronous optical network), and SDH means a synchronous digital hierarchy (synchronous digital hierarchy). The main control board 701, the interface board 702, and the interface board 703 are connected to a system backplane by using a system bus, to implement interworking. As shown in FIG. 25, the interface board 702 includes one or more central processing units 7021. The central processing unit 7021 is configured to: control and manage the interface board 702, and communicate with the central processing unit 7011 on the main control board 701. A memory 7024 in the interface board 702 is configured to store a forwarding entry, and a network processor 7022 may forward a packet by searching for the forwarding entry stored in the memory 7024. The memory 7024 may be further configured to store program code.

The interface board 702 further includes one or more physical interface cards 7023, and the one or more physical interface cards 7023 are configured to: receive a packet sent by a previous-hop node, and send a processed packet to a next-hop node according to an instruction of the central processing unit 7021.

In addition, it may be understood that, the central processing unit 7021 and/or the network processor 7022 in the interface board 702 in FIG. 25 may be dedicated hardware or a chip. For example, an ASIC may be used to implement the foregoing functions. This implementation is usually referred to as a manner in which a forwarding plane performs processing by using dedicated hardware or a chip. In another implementation, the central processing unit 7021 and/or the network processor 7022 may alternatively implement the functions described above by using a general purpose processor, for example, a general purpose CPU.

In addition, it should be understood that there may be one or more main control boards 701. When there are a plurality of main control boards, the main control boards may include a primary main control board and a secondary main control board. There may be one or more interface boards. If the network device has a stronger data processing capability, the network device provides more interface boards. As shown in FIG. 25, the network device includes the interface board 702 and the interface board 703. When a distributed forwarding mechanism is used, a structure of the interface board 703 is basically the same as a structure of the interface board 702, and operations on the interface board 703 are basically similar to operations on the interface board 702. For brevity, details are not described. When the network device has a plurality of interface boards, the plurality of interface boards may communicate with each other by using one or more switching boards 704, and may implement load sharing and redundancy backup, to provide a large-capacity data exchange and processing capability.

In a centralized forwarding architecture, the network device may not need the switching board 704, and the interface board provides a function of processing service data of an entire system. Therefore, a data access and processing capability of a network device of a distributed architecture is greater than that of a network device of a centralized architecture. A specific architecture that is to be used depends on a specific networking deployment scenario. This is not limited herein.

In this embodiment of this application, the memory 7012 and the memory 7024 each may be a ROM or another type of static storage device that can store static information and instructions, may be a RAM or another type of dynamic storage device that can store information and instructions, or may be an EEPROM, a compact disc read-only memory (compact disc read-only Memory, CD-ROM) or another optical disc storage, an optical disc storage (including a compact disc, a laser disc, an optical disc, a digital versatile disc, a Blu-ray disc, or the like), a magnetic disk or another magnetic storage device, or any other medium that can be configured to carry or store expected program code in a form of instructions or a data structure and that can be accessed by a computer, but are not limited thereto. The memory 7024 in the interface board 702 may independently exist, and is connected to the central processing unit 7021 by using a communication bus; or the memory 7024 may be integrated with the central processing unit 7021. The memory 7012 in the main control board 701 may independently exist, and is connected to the central processing unit 7011 by using a communication bus; or the memory 7012 may be integrated with the central processing unit 7011.

The program code stored in the memory 7024 is controlled and executed by the central processing unit 7021, and program code stored in the memory 7012 is controlled and executed by the central processing unit 7011. The central processing unit 7021 and/or the central processing unit 7011 may implement, by executing program code, the method executed by any node provided in the foregoing method embodiments. The program code stored in the memory 7024 and/or the program code stored in the memory 7012 each may include one or more software units. The one or more software units may be functional modules shown in any one of FIG. 21 to FIG. 23.

In this embodiment of this application, the physical interface card 7023 may be any apparatus such as a transceiver, and is configured to communicate with another device or a communication network, for example, an Ethernet, a radio access network (radio access network, RAN), or a wireless local area network (wireless local area network, WLAN).

Optionally, the device shown in any one of FIG. 21 to FIG. 24 may be implemented by using the structure shown in FIG. 25.

An embodiment of this application further provides a computer-readable storage medium. The computer-readable storage medium stores instructions. When the instructions run on a processor, the processor is enabled to perform the steps performed by the first node, the second node, or the third node in the foregoing method embodiments.

An embodiment of this application further provides a computer program product including instructions. When the instructions run on a processor, the processor is enabled to perform the steps performed by the first node, the second node, or the third node in the foregoing method embodiments.

An embodiment of this application further provides a packet forwarding system. As shown in FIG. 1, the packet forwarding system includes a plurality of nodes 01. The plurality of nodes 01 include a first node, and the first node may be configured to implement the method performed by the first node in the foregoing method embodiments.

Optionally, the plurality of nodes 01 may further include a second node and/or a third node. The second node may be configured to implement the method performed by the second node in the foregoing method embodiments, and the third node may be configured to implement the method performed by the third node in the foregoing method embodiments.

A structure of the first node may be shown in FIG. 21, FIG. 24, or FIG. 25, a structure of the third node may be shown in FIG. 22, FIG. 24, or FIG. 25, and a structure of the second node may be shown in FIG. 23, FIG. 24, or FIG. 25.

A person of ordinary skill in the art may understand that all or some of the steps of the foregoing embodiments may be implemented by using hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but cannot be understood as an indication or implication of relative importance. The term "and/or" in this application describes only an association relationship for describing associated objects and indicates that three relationships may exist. For example, A and/or B may indicate the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, improvement, or the like made within the concept and principle of this application shall fall within the protection scope of this application.

## Claims

1. A packet receiving method, applied to a first node, wherein the method comprises:
receiving a first packet, wherein a first destination address field of the first packet comprises a first segment identifier;
determining a first arguments field from the first destination address field, wherein the first arguments field corresponds to the first segment identifier; and
executing at least one first processing behavior indicated by the first arguments field.

2. The method according to claim 1, wherein the executing at least one first processing behavior indicated by the first arguments field comprises:
identifying at least one behavior instruction carried in the first arguments field; and
executing the at least one first processing behavior indicated by the at least one behavior instruction.

3. The method according to claim 2, wherein the identifying at least one behavior instruction carried in the first arguments field comprises:
identifying, based on an arguments field template, the at least one behavior instruction carried in the first arguments field, wherein
the arguments field template is used to define a type, a location, and/or a length of the at least one behavior instruction carried in the first arguments field.

4. The method according to claim 3, wherein the first arguments field further comprises a template identifier, and the method further comprises:
determining the arguments field template based on a correspondence between the template identifier and the arguments field template.

5. The method according to claim 3, wherein the method further comprises:
determining the arguments field template based on a correspondence between a behavior or a flavor indicated by the first segment identifier and the arguments field template.

6. The method according to claim 2, wherein the identifying at least one behavior instruction carried in the first arguments field comprises:
identifying at least one flag bit carried in the first arguments field, wherein each flag bit corresponds to one behavior instruction; and
identifying, based on the at least one flag bit, the at least one behavior instruction carried in the first arguments field.

7. The method according to claim 6, wherein each flag bit indicates whether the first arguments field carries a corresponding behavior instruction, or indicates whether a corresponding behavior instruction in the first arguments field can be identified.

8. The method according to any one of claims 1 to 7, wherein the executing at least one first processing behavior indicated by the first arguments field comprises:
on a basis that a structured parameter function of the first node is in an enabled state, executing the at least one first processing behavior indicated by the first arguments field; or
determining, based on a behavior or a flavor indicated by a function field in the first segment identifier, that the first arguments field is a structured arguments field, and executing the at least one first processing behavior indicated by the first arguments field.

9. The method according to any one of claims 1 to 8, wherein the first segment identifier is a compressed segment identifier, and a length of the compressed segment identifier is less than 128 bits.

10. The method according to any one of claims 1 to 8, wherein a length of the first segment identifier is 128 bits.

11. The method according to any one of claims 1 to 10, wherein the first arguments field is comprised in the first segment identifier, or the first arguments field is located behind the first segment identifier.

12. The method according to any one of claims 1 to 11, wherein the first packet belongs to a target service flow, and the method further comprises:
receiving a second packet of the target service flow, wherein a second destination address field of the second packet comprises a second segment identifier;
determining a second arguments field from the second destination address field, wherein the second arguments field corresponds to the second segment identifier; and
executing at least one second processing behavior indicated by the second arguments field, wherein the at least one second processing behavior is different from the at least one first processing behavior.

13. The method according to any one of claims 1 to 12, wherein the first segment identifier further comprises a function field, and the function field indicates a third processing behavior; and the method further comprises:
processing the first packet according to the third processing behavior.

14. The method according to claim 13, wherein the first arguments field is further used to carry a parameter of the third processing behavior.

15. The method according to claim 14, wherein the parameter of the third processing behavior comprises:
a parameter of a behavior of an endpoint with decapsulation and layer 2 L2 table flooding End.DT2M, and/or an index of a compressed segment identifier.

16. The method according to any one of claims 1 to 15, wherein the executing at least one first processing behavior indicated by the first arguments field comprises:
processing the first packet according to the at least one first processing behavior indicated by the first arguments field.

17. The method according to claim 16, wherein the at least one first processing behavior comprises at least one of the following behaviors:
forwarding the packet based on a slice resource of a network slice;
forwarding the packet based on a network service indicated by application-aware information;
performing in-situ flow information telemetry;
forwarding the packet based on an allocated network resource;
encrypting and forwarding the packet; and
performing security verification.

18. The method according to claim 17, wherein the first arguments field comprises at least one of a first subfield, a second subfield, a third subfield, a fourth subfield, a fifth subfield, and a sixth subfield, wherein
the first subfield is used to carry slice information of the network slice;
the second subfield is used to carry the application-aware information;
the third subfield is used to carry information about the in-situ flow information telemetry;
the fourth subfield is used to carry information about the allocated network resource;
the fifth subfield is used to carry an encrypting manner of the encrypting and forwarding; and
the sixth subfield is used to carry a message authentication code used to perform the security verification.

19. The method according to claim 18, wherein the first arguments field further comprises a seventh subfield, wherein
the seventh subfield is used to carry the parameter of the third processing behavior indicated by the function field in the first segment identifier.

20. The method according to any one of claims 1 to 19, wherein the at least one first processing behavior comprises at least one of the following behaviors:
adjusting a running status of the first node; and
locally establishing a flow table, a forwarding table, and/or a state table for traffic in the first node.

21. The method according to any one of claims 1 to 20, wherein the determining a first arguments field from the first destination address field comprises:
on a basis of determining that the first segment identifier is a local segment identifier SID of the first node, determining the first arguments field from the first destination address field.

22. The method according to any one of claims 1 to 21, wherein the first node does not support a segment routing based on Internet protocol version 6 SRv6 forwarding technology, and the determining a first arguments field from the first destination address field comprises:
determining the first arguments field from the first destination address field based on local configuration information of the first node.

23. The method according to any one of claims 1 to 22, wherein the first arguments field further comprises at least one compressed segment identifier.

24. A packet sending method, wherein the method comprises:
encapsulating a first segment identifier into a first packet; and
sending the first packet, so that a node receiving the first packet determines a first arguments field from a first destination address field of the first packet, and executes at least one first processing behavior indicated by the first arguments field, wherein
the first arguments field corresponds to the first segment identifier.

25. The method according to claim 24, wherein the encapsulating a first segment identifier into a first packet comprises:
encapsulating the first segment identifier into the first destination address field; or
encapsulating a segment routing header SRH into the first packet, wherein the SRH comprises the first segment identifier.

26. The method according to claim 24 or 25, wherein the first packet belongs to a target service flow, and the method further comprises:
encapsulating a second segment identifier into a second packet of the target service flow; and
sending the second packet, so that a node receiving the second packet determines a second arguments field from a second destination address field of the second packet, and executes at least one second processing behavior indicated by the second arguments field, wherein
the second arguments field corresponds to the second segment identifier, and the at least one second processing behavior is different from the at least one first processing behavior.

27. The method according to claim 26, wherein a node indicated by the first segment identifier is the same as a node indicated by the second segment identifier.

28. The method according to any one of claims 24 to 27, wherein the first segment identifier is a compressed segment identifier, and a length of the compressed segment identifier is less than 128 bits; or
a length of the first segment identifier is 128 bits.

29. The method according to any one of claims 24 to 28, wherein the first arguments field is comprised in the first segment identifier, or the first arguments field is located behind the first segment identifier.

30. A packet forwarding method, applied to a packet forwarding system, wherein the packet forwarding system comprises a first node and a second node, and the method comprises:
receiving, by the first node, a first packet, wherein a first destination address field of the first packet comprises a first segment identifier;
determining, by the first node, a first arguments field from the first destination address field, wherein the first arguments field corresponds to the first segment identifier; and
executing, by the first node, at least one first processing behavior indicated by the first arguments field; and
receiving, by the second node, a second packet sent by the first node, wherein the second packet is obtained based on the first packet, and a second destination address field of the second packet comprises a second segment identifier;
determining, by the second node, a second arguments field from the second destination address field, wherein the second arguments field corresponds to the second segment identifier; and
executing, by the second node, at least one second processing behavior indicated by the second arguments field.

31. The method according to claim 30, wherein the first arguments field and the second arguments field are a same field.

32. The method according to claim 30 or 31, wherein the at least one first processing behavior is the same as the at least one second processing behavior.

33. The method according to any one of claims 30 to 32, wherein both the first segment identifier and the second segment identifier are compressed segment identifiers, and a length of the compressed segment identifier is less than 128 bits; or
both a length of the first segment identifier and a length of the second segment identifier are 128 bits.

34. The method according to any one of claims 30 to 33, wherein the first arguments field is comprised in the first segment identifier, and the second arguments field is comprised in the second segment identifier; or
the first arguments field is located behind the first segment identifier, and the second arguments field is located behind the second segment identifier.

35. A network device, wherein the network device comprises a memory, a processor, and a computer program that is stored in the memory and that can run on the processor, and when executing the computer program, the processor implements the method according to any one of claims 1 to 34.

36. A computer-readable storage medium, wherein the computer-readable storage medium stores instructions, and when the instructions run on a processor, the processor is enabled to perform the method according to any one of claims 1 to 34.

37. A computer program product comprising instructions, wherein the instructions are executed by a processor to implement the method according to any one of claims 1 to 34.

38. A packet forwarding system, wherein the system comprises a plurality of nodes, wherein
at least one of the plurality of nodes is configured to implement the method according to any one of claims 1 to 23.

39. The system according to claim 38, wherein at least one of the plurality of nodes is further configured to implement the method according to any one of claims 24 to 29.
